# EUROPEAN PATENT APPLICATION

(11) **EP 4 492 747 A1**
(43) Date of publication of application: **15.01.2025**
(21) Application number: 23777817.0
(22) Date of filing: 13.03.2023
(51) Int. Cl.: H04L 45/00, H04W 8/16

(54) **COMMUNICATION METHOD AND APPARATUS**

(30) Priority: 29.03.2022 CN 202210326238
(71) Applicant: Huawei Technologies Co., Ltd., Shenzhen, Guangdong 518129 (CN)
(72) Inventor: ZHU, Shichao, Shenzhen, Guangdong 518129 (CN); SUN, Fei, Shenzhen, Guangdong 518129 (CN); ZENG, Qinghai, Shenzhen, Guangdong 518129 (CN)
(74) Representative: Maiwald GmbH
(86) International application number: PCT/CN2023/081151
(87) International publication number: WO 2023/185440

(57) **Abstract**

This application provides a communication method and an apparatus. The method includes: A first node located in a first cell obtains a first correspondence between a cell provided by the first node and tracking area information, where the first correspondence is related to tracking area information corresponding to the first cell. When migrating from the first cell to a second cell, the first node obtains a second correspondence between the cell provided by the first node and tracking area information, where the second correspondence is related to tracking area information corresponding to the second cell. According to the method, the first node may obtain tracking area information related to a current accessed cell, so that a terminal within a coverage area of the first node can report correct location information to a core network device, to ensure a success rate for paging the terminal.

## Description

### CROSS-REFERENCE TO RELATED APPLICATION

This application claims priority to Chinese Patent Application No. 202210326238.8, filed with the China National Intellectual Property Administration on March 29, 2022 and entitled "COMMUNICATION METHOD AND APPARATUS", which is incorporated herein by reference in its entirety.

### TECHNICAL FIELD

Embodiments of this application relate to the field of communication technologies, and in particular, to a communication method and an apparatus.

### BACKGROUND

In a current standard, an operations, administration, and maintenance (operations, administration, and maintenance, OAM) statically configures tracking area information for an integrated access and backhaul (integrated access and backhaul, IAB) node based on an initial accessed cell or an initial location of the IAB-node, or the like. Currently, the IAB-node is considered to be deployed on a public transport vehicle such as a high-speed railway, a bus, or a subway, to serve terminals in the vehicle, to overcome a high path loss caused as wireless signals pass through vehicle carriages, so as to improve quality of service. As the public transport vehicle moves, cell handover or cell migration occurs on the IAB-node deployed on the public transport vehicle. How to update the tracking area information is a technical problem to be resolved in this application.

### SUMMARY

This application provides a communication method and an apparatus, to update initially configured tracking area information.

According to a first aspect, a communication method is provided. The method is performed by a first node, or may be performed by a component (a processor, a chip, another component, or the like) disposed in the first node. An example in which the method is performed by the first node is used. The method includes: A first node in a first cell obtains a first correspondence between a cell provided by the first node and tracking area information, where the first correspondence is related to tracking area information corresponding to the first cell; the first node migrates from the first cell to a second cell; and the first node obtains a second correspondence between the cell provided by the first node and tracking area information, where the second correspondence is related to tracking area information corresponding to the second cell.

An example in which the first node is an integrated access and backhaul (integrated access and backhaul, IAB) IAB-distributed unit (distributed unit, DU) is used. In the foregoing method, when the IAB-DU is located in the first cell, the IAB-DU may obtain the first correspondence between the cell provided by the IAB-DU and the tracking area information. The first correspondence is related to the first cell. For example, if the cell provided by the IAB-DU includes a third cell, the first correspondence includes a correspondence between the third cell and the tracking area information. Tracking area information broadcast by the IAB-DU in the third cell is tracking area information that has the first correspondence with the third cell. When migrating from the first cell to the second cell, the IAB-DU node may obtain the second correspondence between the cell provided by the IAB-DU and the tracking area information, where the second correspondence is related to the tracking area information of the second cell. For example, if the cell provided by the IAB-DU includes a fourth cell, the second correspondence includes a correspondence between the fourth cell and the tracking area information. Tracking area information broadcast by the IAB-DU in the fourth cell is tracking area information that has the second correspondence with the fourth cell. In this way, when the IAB-DU is located in the first cell, broadcast tracking area information is related to the first cell, and when the IAB-DU moves to the second cell, broadcast tracking area information is related to the second cell. When receiving the tracking area information that is related to the second cell and that is broadcast by the IAB-DU, a user equipment (user equipment, UE) located in a coverage area of the second cell may add the tracking area information to a tracking area identity (tracking area identity, TAI) list, and report the tracking area information to a core network. When paging the UE, the core network may determine the second cell based on the tracking area information that is related to the second cell and that is included in the TAI list of the UE, and page the UE in the second cell, to ensure a success rate of paging the UE. In addition, because a donor base station and the core network do not need to perform radio access network (radio access network, RAN) configuration update, communication overheads between the core network and the base station are reduced.

In a design, that the first node obtains a second correspondence between the cell provided by the first node and tracking area information includes: The first node receives a first message from a second node, where the first message includes indication information of the second correspondence; and the first node obtains the second correspondence based on the first message.

According to the foregoing design, the second node may send the second correspondence to the first node, and the second node does not need to perform inference. This reduces operation overheads in the first node.

In a design, that the first node obtains a second correspondence between the cell provided by the first node and tracking area information includes: The first node receives a first message from a second node, where the first message includes the tracking area information corresponding to the second cell; and the first node determines the second correspondence based on the tracking area information corresponding to the second cell.

According to the foregoing design, the second node sends the tracking area information corresponding to the second cell to the first node, and the first node infers the second correspondence based on the tracking area information corresponding to the second cell. Because the tracking area information corresponding to the second cell occupies fewer bits than the second correspondence does, air interface overheads are reduced by using the foregoing design.

In a design, before the first node receives the first message from the second node, the method further includes: The first node sends information about the second cell or location information of the first node to the second node, where a location of the first node is within the coverage area of the second cell.

According to the foregoing method, the first node actively reports the information about the second cell or the current location information to the second node. The first node determines the tracking area information corresponding to the second cell or the second correspondence based on the current location information or the information about the second cell, and notifies the second node, so that the first node may obtain tracking area information related to a current accessed cell.

In a design, the method further includes: The first node sends a notification message to a donor node of the first node, where the notification message is used to notify the donor node that a correspondence between the cell provided by the first node and the tracking area information has been updated. Optionally, the first node may send the notification message to the donor node when the first correspondence is different from the second correspondence.

According to the foregoing design, when updating the tracking area information corresponding to the cell provided by the first node, the first node notifies the donor node, so that the donor node may maintain the new second correspondence for the first node, and notifies, in a timely manner, the donor node to update the maintained tracking area information of the first node.

In a design, the first cell and the second cell belong to a same donor node; or the first cell belongs to a source donor node, and the second cell belongs to a target donor node.

In a design, the first node is an IAB-DU, and the second node is an IAB-mobile termination (mobile termination, MT), an operations, administration, and maintenance (operations, administration, and maintenance, OAM), a donor node, a source donor node, or a target donor node.

According to a second aspect, a communication method is provided. The method is performed by a second node or a component (a processor, a chip, another component, or the like) disposed in the second node. An example in which the method is performed by the second node is used. The method includes: The second node obtains a second correspondence between a cell provided by a first node and tracking area information, where the second correspondence is related to tracking area information corresponding to a second cell, and the first node is located in the second cell; and the second node sends a first message to the first node, where the first message includes indication information of the second correspondence, and the second node is an IAB-node or a donor node.

According to the foregoing method, the second node actively obtains the second correspondence between the cell provided by the first node and the tracking area information, and notifies the first node of the second correspondence, so that the first node obtains the tracking area information corresponding to the current second cell, to ensure a success rate of paging a terminal in a coverage area of the first node.

In a design, that the second node obtains a second correspondence between a cell provided by a first node and tracking area information includes: The second node receives a second message of a third node, where the second message includes the tracking area information corresponding to the second cell; and the second node determines the second correspondence based on the tracking area information corresponding to the second cell.

In a design, that the second node obtains a second correspondence between a cell provided by a first node and tracking area information includes: The second node receives a second message of a third node, where the second message includes the indication information of the second correspondence; and the second node obtains the second correspondence based on the second message.

In a design, before the second node receives the second message from the third node, the method further includes:

The second node reports information about the second cell or location information of the first node to the third node, where a location of the first node is within a coverage area of the second cell; and the second node receives the indication information of the second correspondence from the third node, or the second node receives the tracking area information corresponding to the second cell from the third node, and the second node determines the second correspondence based on the tracking area information corresponding to the second cell.

In a design, that the second node obtains a second correspondence between a cell provided by a first node and tracking area information includes: The second node receives information about the second cell that is from the first node or location information of the first node that is from the first node, where a location of the first node is within a coverage area of the second cell; the second node determines, based on the information about the second cell or the location information of the first node, the tracking area information corresponding to the second cell; and the second node determines the second correspondence based on the tracking area information corresponding to the second cell.

In a design, that the second node obtains a second correspondence between a cell provided by a first node and tracking area information includes: The second node determines, based on a cell measurement result, that the first node needs to be handed over from a first cell to the second cell; and the second node determines the second correspondence based on the tracking area information corresponding to the second cell. Optionally, the IAB-node, for example, an IAB-MT node, may report measurement results of different measured cells to the second node. The second node may select, based on the reported measurement results of the different cells, a cell whose signal quality meets a requirement as the second cell, and the like.

In a design, the first node is an IAB-DU, and the third node is a parent node of the first node, an IAB-MT, an OAM, a donor node, a source donor node, a target donor node, or an access and mobility management function (access and mobility management function, AMF).

According to a third aspect, a communication method is provided. The method is performed by a fourth node or a component (a processor, a chip, another component, or the like) disposed in the fourth node. An example in which the method is performed by the fourth node is used. The method includes: The fourth node receives a first handover request from a fifth node, where the handover request includes indication information of a first correspondence between a cell provided by an IAB-node and tracking area information, and the first correspondence is related to tracking area information corresponding to a first cell; the fourth node obtains a second correspondence between the cell provided by the IAB-node and the tracking area information; and when the first correspondence is different from the second correspondence, the fourth node sends indication information of the second correspondence to a sixth node, where the fifth node is the same as or different from the sixth node.

In a design, the fourth node is a target donor node, the fifth node is a source donor node or an AMF, and the sixth node is the source donor node, the AMF, an IAB-MT, or an IAB-DU.

In a design, that the fifth node obtains a second correspondence between the cell provided by the IAB-node and the tracking area information includes: The fifth node determines the second correspondence based on tracking area information corresponding to a second cell, where the first handover request further includes the indication information of the second correspondence, or the handover request further includes indication information of the second cell.

According to a fourth aspect, a communication method is provided. The method is performed by a fifth node or a component (a processor, a chip, another component, or the like) disposed in the fifth node. An example in which the method is performed by the fifth node is used. The method includes: The fifth node obtains a first correspondence between a cell provided by an IAB-node and tracking area information; and the fifth node sends a first handover request to a fourth node, where the first handover request includes indication information of the first correspondence, and the first correspondence is related to tracking area information corresponding to a first cell.

In a design, that the fifth node obtains a first correspondence between a cell provided by an IAB-node and tracking area information includes: The fifth node determines a source cell accessed by the IAB-node, where the source cell is the first cell; and the fifth node determines the first correspondence based on the tracking area information corresponding to the first cell.

In a design, the first handover request further includes indication information of a second cell.

In a design, the fifth node is a source donor node, and the fourth node is a target donor node.

According to a fifth aspect, a communication method is provided. The method is executed by an AMF or a component (a processor, a chip, another component, or the like) disposed in the AMF. An example in which the method is performed by the AMF is used. The method includes: The AMF receives a first handover request from a source donor node, where the first handover request carries information about a second cell; and the AMF sends a second handover request to a target donor node, where the second handover request carries the information about the second cell.

In a design, the method further includes: The AMF determines, based on the information about the second cell, tracking area information corresponding to the second cell. The second handover request further includes the tracking area information corresponding to the second cell.

In a design, the method further includes: The AMF determines, based on the information about the second cell, tracking area information corresponding to the second cell; and the AMF determines, based on the tracking area information corresponding to the second cell, a second correspondence between a cell provided by an IAB-DU node and tracking area information. The second handover request further includes indication information of the second correspondence.

According to a sixth aspect, a communication method is provided. The method is performed by a terminal or a component (a processor, a chip, another component, or the like) disposed in the terminal. An example in which the method is performed by the terminal is used. The method includes: The terminal receives a configuration message from an AMF, where the configuration message includes indication information of a tracking area information list, and tracking area information included in the tracking area information list is determined based on a movement route of an IAB-node accessed by the terminal.

According to a seventh aspect, a communication method is provided. The method is performed by an AMF or a component (a processor, a chip, another component, or the like) disposed in the AMF. An example in which the method is performed by the AMF is used. The method includes: The AMF sends a configuration message to a terminal, where the configuration message includes indication information of a tracking area information list, and tracking area information included in the tracking area information list is determined based on a movement route of an IAB-node accessed by the terminal.

According to an eighth aspect, an apparatus is provided. For beneficial effects, refer to descriptions in the first aspect. The apparatus may be a first node, an apparatus configured in the first node, or an apparatus that can be used together with the first node. The apparatus includes units that one to one correspond to the methods/operations/steps/actions described in the first aspect. The units may be hardware circuits, software, or may be implemented by a hardware circuit in combination with software.

In a design, the apparatus includes a processing unit, and the processing unit may perform the method in the first aspect. Specifically, the processing unit is configured to: when a first node is located in a first cell, obtain a first correspondence between a cell provided by the first node and tracking area information, where the first correspondence is related to tracking area information corresponding to the first cell; and when the first node migrates from the first cell to a second cell, obtain a second correspondence between the cell provided by the first node and tracking area information, where the second correspondence is related to tracking area information corresponding to the second cell. Optionally, the apparatus further includes a communication unit, and the communication unit is configured to receive a first message from a second node, where the first message carries indication information of the second correspondence, or carries the tracking area information corresponding to the second cell.

In another design, the apparatus includes a processor, configured to implement the method in the first aspect. The apparatus may further include a memory, configured to store a computer program and/or data. The memory is coupled to the processor. When executing the computer program stored in the memory, the processor can implement the method described in the first aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes:
a memory, configured to store a computer program; and a processor, configured to: when a first node is located in a first cell, obtain a first correspondence between a cell provided by the first node and tracking area information, where the first correspondence is related to tracking area information corresponding to the first cell, where when the first node migrates from the first cell to a second cell, obtain a second correspondence between the cell provided by the first node and tracking area information, where the second correspondence is related to tracking area information corresponding to the second cell. Optionally, the communication interface is configured to receive a first message from a second node, where the first message carries indication information of the second correspondence, or carries the tracking area information corresponding to the second cell.

For specific execution processes of the communication interface and the processor, refer to the description of the first aspect. Details are not described again.

According to a ninth aspect, an apparatus is provided. The apparatus may be a second node, an apparatus configured in the second node, or an apparatus that can be used together with the second node. The apparatus includes units that one to one correspond to the methods/operations/steps/actions described in the second aspect. The units may be hardware circuits, software, or may be implemented by a hardware circuit in combination with software.

In a design, the apparatus includes a processing unit and a communication unit, and the processing unit and the communication unit may perform the method in the second aspect. Specifically, the processing unit is configured to obtain a second correspondence between a cell provided by a first node and tracking area information, where the second correspondence is related to tracking area information corresponding to a second cell; and the communication unit is configured to send a first message to the first node, where the first message includes indication information of the second correspondence.

In another design, the apparatus includes a processor, configured to implement the method in the first aspect. The apparatus may further include a memory, configured to store a computer program and/or data. The memory is coupled to the processor. When executing the computer program stored in the memory, the processor can implement the method described in the first aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes: a memory, configured to store a computer program; a processor, configured to obtain a second correspondence between a cell provided by a first node and tracking area information, where the second correspondence is related to tracking area information corresponding to a second cell; and a communication interface, configured to send a first message to the first node, where the first message includes indication information of the second correspondence.

For specific execution processes of the communication interface and the processor, refer to the description of the second aspect. Details are not described again.

According to a tenth aspect, an apparatus is provided. For beneficial effects, refer to descriptions in the third aspect. The apparatus may be a fourth node, an apparatus configured in the fourth node, or an apparatus that can be used together with the fourth node. The apparatus includes units that one to one correspond to the methods/operations/steps/actions described in the third aspect. The units may be hardware circuits, software, or may be implemented by a hardware circuit in combination with software.

In a design, the apparatus includes a processing unit and a communication unit, and the processing unit and the communication unit may perform the method in the third aspect. Specifically, the communication unit is configured to receive a first handover request from a fifth node, and the handover request includes indication information of a first correspondence between a cell provided by an IAB-node and tracking area information, where the first correspondence is related to tracking area information corresponding to a first cell; and the processing unit is configured to obtain a second correspondence between the cell provided by the IAB-node and the tracking area information. The communication unit is further configured to: when the first correspondence is different from the second correspondence, send indication information of the second correspondence to a sixth node, where the fifth node is the same as or different from the sixth node.

In another design, the apparatus includes a processor, configured to implement the method in the third aspect. The apparatus may further include a memory, configured to store a computer program and/or data. The memory is coupled to the processor. When executing the computer program stored in the memory, the processor can implement the method described in the third aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes:
a memory, configured to store a computer program; a communication interface, configured to receive a first handover request from a fifth node, and the handover request includes indication information of a first correspondence between a cell provided by an IAB-node and tracking area information, where the first correspondence is related to tracking area information corresponding to a first cell; a processor, configured to obtain a second correspondence between the cell provided by the IAB-node and the tracking area information; and the communication interface, further configured to: when the first correspondence is different from the second correspondence, send indication information of the second correspondence to a sixth node, where the fifth node is the same as or different from the sixth node.

For specific execution processes of the communication interface and the processor, refer to the description of the third aspect. Details are not described again.

According to an eleventh aspect, an apparatus is provided. For beneficial effects, refer to descriptions in the fourth aspect. The apparatus may be a fifth node, an apparatus configured in the fifth node, or an apparatus that can be used together with the fifth node. The apparatus includes units that one to one correspond to the methods/operations/steps/actions described in the fourth aspect. The units may be hardware circuits, software, or may be implemented by a hardware circuit in combination with software.

In a design, the apparatus includes a processing unit and a communication unit, and the processing unit and the communication unit may perform the method in the fourth aspect. Specifically, the processing unit is configured to obtain a first correspondence between a cell provided by an IAB-node and tracking area information; and the communication unit is configured to send a first handover request to a fourth node, where the first handover request includes indication information of the first correspondence, and the first correspondence is related to tracking area information corresponding to a first cell.

In another design, the apparatus includes a processor, configured to implement the method in the fourth aspect. The apparatus may further include a memory, configured to store a computer program and/or data. The memory is coupled to the processor. When executing the computer program stored in the memory, the processor can implement the method described in the fourth aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes:
a memory, configured to store a computer program; a processor, configured to obtain a first correspondence between a cell provided by an IAB-node and tracking area information; and a communication interface, configured to send a first handover request to a fourth node, where the first handover request includes indication information of the first correspondence, and the first correspondence is related to tracking area information corresponding to a first cell.

For specific execution processes of the communication interface and the processor, refer to the description of the fourth aspect. Details are not described again.

According to a twelfth aspect, an apparatus is provided. For beneficial effects, refer to descriptions in the fifth aspect. The apparatus may be an AMF, an apparatus configured in the AMF, or an apparatus that can be used together with the AMF. The apparatus includes units that one to one correspond to the methods/operations/steps/actions described in the fifth aspect. The units may be hardware circuits, software, or may be implemented by a hardware circuit in combination with software.

In a design, the apparatus includes a communication unit, and the communication unit may perform the method in the fifth aspect. Specifically, the communication unit is configured to receive a first handover request from a source donor node, where the first handover request carries information about a second cell; and the communication unit is configured to send a second handover request to a target donor node, where the second handover request carries the information about the second cell. Optionally, the processing unit is configured to process the first handover request, generate the second handover request, and the like.

In another design, the apparatus includes a processor, configured to implement the method in the fifth aspect. The apparatus may further include a memory, configured to store a computer program and/or data. The memory is coupled to the processor. When executing the computer program stored in the memory, the processor can implement the method described in the fifth aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes:
a memory, configured to store a computer program; and a communication interface, configured to receive a first handover request from a source donor node, where the first handover request carries information about a second cell; and send a second handover request to a target donor node, where the second handover request carries the information about the second cell. Optionally, the processing unit is configured to process the first handover request, generate the second handover request, and the like. Optionally, the processor is configured to process the first handover request, generate the second handover request, and the like.

For specific execution processes of the communication interface and the processor, refer to the description of the fifth aspect. Details are not described again.

According to a thirteenth aspect, an apparatus is provided. For beneficial effects, refer to descriptions in the sixth aspect. The apparatus may be a terminal, an apparatus configured in the terminal, or an apparatus that can be used together with the terminal. The apparatus includes units that one to one correspond to the methods/operations/steps/actions described in the fifth aspect. The units may be hardware circuits, software, or may be implemented by a hardware circuit in combination with software.

In a design, the apparatus includes a processing unit and a communication unit, and the processing unit and the communication unit may perform the method in the sixth aspect. Specifically, the processing unit is configured to receive a configuration message from an AMF, where the configuration message includes indication information of a tracking area information list, and tracking area information included in the tracking area information list is determined based on a movement route of an IAB-node accessed by the terminal. The communication unit is configured to process the configuration message.

In another design, the apparatus includes a processor, configured to implement the method in the fifth aspect. The apparatus may further include a memory, configured to store a computer program and/or data. The memory is coupled to the processor. When executing the computer program stored in the memory, the processor can implement the method described in the fifth aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes:
a memory, configured to store a computer program; and a communication interface, configured to receive, for the terminal, a configuration message from an AMF, where the configuration message includes indication information of a tracking area information list, and tracking area information included in the tracking area information list is determined based on a movement route of an IAB-node accessed by the terminal. A processor is configured to process the configuration message.

For specific execution processes of the communication interface and the processor, refer to the description of the sixth aspect. Details are not described again.

According to a fourteenth aspect, an apparatus is provided. For beneficial effects, refer to descriptions in the seventh aspect. The apparatus may be an AMF, an apparatus configured in the AMF, or an apparatus that can be used together with the AMF. The apparatus includes units that one to one correspond to the methods/operations/steps/actions described in the seventh aspect. The units may be hardware circuits, software, or may be implemented by a hardware circuit in combination with software.

In a design, the apparatus includes a communication unit, and the communication unit may perform the method in the seventh aspect. Specifically, the communication unit is configured to send a configuration message to a terminal, where the configuration message includes indication information of a tracking area information list, and tracking area information included in the tracking area information list is determined based on a movement route of an IAB-node accessed by the terminal. Optionally, a processing unit is configured to determine the configuration message.

In another design, the apparatus includes a processor, configured to implement the method in the sixth aspect. The apparatus may further include a memory, configured to store a computer program and/or data. The memory is coupled to the processor. When executing the computer program stored in the memory, the processor can implement the method described in the sixth aspect. The apparatus may further include a communication interface, and the communication interface is used by the apparatus to communicate with another device. The communication interface may be a transceiver, a circuit, a bus, a module, a pin, or a communication interface of another type, and the another device may be a second node, or the like. For example, the apparatus includes:
a memory, configured to store a computer program; and a communication interface, configured to send a configuration message to a terminal, where the configuration message includes indication information of a tracking area information list, and tracking area information included in the tracking area information list is determined based on a movement route of an IAB-node accessed by the terminal. Optionally, a processor is configured to determine the configuration message.

For specific execution processes of the communication interface and the processor, refer to the description of the seventh aspect. Details are not described again.

According to a fifteenth aspect, this application further provides a computer-readable storage medium, including a computer program. When the computer program is run on a computer, the computer is enabled to perform the method according to any one of the first aspect to the seventh aspect.

According to a sixteenth aspect, this application further provides a chip system. The chip system includes a processor, may further include a memory, and is configured to implement the method in any one of the first aspect to the seventh aspect. The chip system may include a chip, or may include a chip and another discrete component.

According to a seventeenth aspect, this application further provides a computer program product, including a computer program. When the computer program is run on a computer, the computer is enabled to perform the method according to any one of the first aspect to the seventh aspect.

According to an eighteenth aspect, this application further provides a system. The system includes: the apparatus in the eighth aspect and the apparatus in the ninth aspect; the apparatus in the tenth aspect and the apparatus in the eleventh aspect; the apparatus in the tenth aspect and the apparatus in the twelfth aspect; or the apparatus in the third aspect and the apparatus in the fourteenth aspect.

### BRIEF DESCRIPTION OF DRAWINGS

FIG. 1 is a diagram of a communication system according to this application;
FIG. 2 and FIG. 3 are diagrams of IAB-nodes according to of this application;
FIG. 4 to FIG. 15 are flowcharts according to this application; and
FIG. 16 and FIG. 17 are diagrams of apparatuses according to this application.

### DESCRIPTION OF EMBODIMENTS

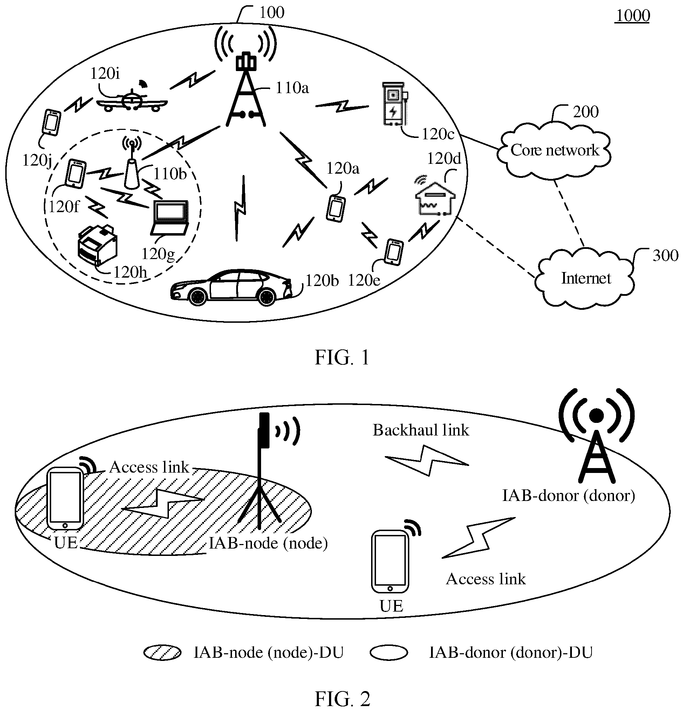

FIG. 1 is a diagram of an architecture of a communication system 1000 to which this application is applicable. As shown in FIG. 1, the communication system includes a radio access network 100 and a core network 200. Optionally, the communication system 1000 may further include an internet 300. The radio access network 100 may include at least one access network device (for example, 110a and 100b in FIG. 1), and may further include at least one terminal (for example, 120a to 120j in FIG. 1). The terminal is connected to the access network device in a wireless manner, and the access network device is connected to the core network in a wireless or wired manner. A core network device and the access network device may be different physical devices that are independent of each other, or logical functions of a core network device and the access network device may be integrated into a same physical device, or a part of functions of a core network device and a part of functions of the access network device may be integrated into one physical device. Terminals may be connected to each other in a wired or wireless manner, and the access network devices may be connected to each other in a wired or wireless manner. FIG. 1 is merely a diagram. The communication system may further include another network device, for example, may further include a wireless relay device and a wireless backhaul device, which are not shown in FIG. 1.

The access network device may be a base station (base station), an evolved NodeB (evolved NodeB, eNodeB), a transmission reception point (transmission reception point, TRP), a next generation NodeB (next generation NodeB, gNB or gNodeB) in a 5th generation (5th generation, 5G) mobile communication system, an access network device in an open radio access network (open radio access network, O-RAN), a next generation base station in a 6th generation (6th generation, 6G) mobile communication system, a base station in a future mobile communication system, an access node in a wireless fidelity (wireless fidelity, Wi-Fi) system, or the like; or may be a module or unit that completes some functions of the base station, for example, may be a central unit (central unit, CU), a distributed unit (distributed unit, DU), a central unit control plane (CU control plane, CU-CP) module, or a central unit user plane (CU user plane, CU-UP) module. The access network device may be a macro base station (for example, 110a in FIG. 1), or may be a micro base station or an indoor base station (for example, 110b in FIG. 1), or may be a relay node, a donor node, or the like. A specific technology and a specific device form that are used by the access network device are not limited in this application.

In this application, an apparatus configured to implement the functions of the access network device may be an access network device; or may be an apparatus, for example, a chip system, a hardware circuit, a software module, or a combination of a hardware circuit and a software module, that can support the access network device in implementing the functions, where the apparatus may be installed in the access network device or may be used together with the access network device. In this application, the chip system may include a chip, or may include a chip and another discrete component. For ease of descriptions, the following describes the technical solutions provided in this application by using an example in which the apparatus configured to implement the functions of the access network device is an access network device and the access network device is a base station.

### (1) Protocol layer structure

Communication between the access network device and the terminal complies with a specific protocol layer structure. The protocol layer structure may include a control plane protocol layer structure and a user plane protocol layer structure. For example, the control plane protocol layer structure may include functions of protocol layers such as a radio resource control (radio resource control, RRC) layer, a packet data convergence protocol (packet data convergence protocol, PDCP) layer, a radio link control (radio link control, RLC) layer, a media access control (media access control, MAC) layer, a physical layer, and the like. For example, the user plane protocol layer structure may include functions of protocol layers such as a PDCP layer, an RLC layer, a MAC layer, a physical layer, and the like. In a possible implementation, a service data adaptation protocol (service data adaptation protocol, SDAP) layer may be further included above the PDCP layer.

### (2) Central unit (central unit, CU) and distributed unit (distributed unit, DU)

An access device may include a CU and a DU. A plurality of DUs may be centrally controlled by one CU. For example, an interface between the CU and the DU may be referred to as an F1 interface. A control plane (control plane, CP) interface may be F1-C, and a user plane (user plane, UP) interface may be F1-U. A specific name of each interface is not limited in this application. Division may be performed between the CU and the DU based on protocol layers of the wireless network. For example, functions of the PDCP layer and protocol layers above the PDCP layer are disposed on the CU, and functions of protocol layers below the PDCP layer (for example, the RLC layer and the MAC layer) are disposed on the DU. For another example, functions of protocol layers above the PDCP layer are disposed on the CU, and functions of the PDCP layer and protocol layers below the PDCP layer are disposed on the DU. This is not limited.

Division of processing functions of the CU and the DU based on the protocol layers is merely an example, and the processing functions of the CU and the DU may alternatively be divided in another manner. For example, the CU or the DU may be divided into functions having more protocol layers. For another example, the CU or the DU may be further divided into some processing functions of protocol layers. In a design, some functions of the RLC layer and functions of protocol layers above the RLC layer are disposed on the CU, and the remaining functions of the RLC layer and functions of protocol layers below the RLC layer are disposed on the DU. In another design, division of functions of the CU or the DU may alternatively be performed based on service types or other system requirements. For example, the division may be performed based on delays. Functions whose processing time needs to meet a delay requirement are disposed on the DU, and functions whose processing time does not need to meet the delay requirement are disposed on the CU. In another design, the CU may alternatively have one or more functions of the core network. For example, the CU may be disposed on a network side to facilitate centralized management. In another design, a radio unit (radio unit, RU) of the DU is disposed remotely. Optionally, the RU may have a radio frequency function.

Optionally, division of functions of the DU and the RU may be performed at a physical layer (physical layer, PHY). For example, the DU may implement higher-layer functions of the PHY layer, and the RU may implement lower-layer functions of the PHY layer. In the case of sending, functions of the PHY layer may include at least one of the following functions: addition of cyclic redundancy check (cyclic redundancy check, CRC) code, channel encoding, rate matching, scrambling, modulation, layer mapping, precoding, resource mapping, physical antenna mapping, or radio frequency sending. In the case of receiving, functions of the PHY layer may include at least one of the following: CRC check, channel decoding, de-rate matching, descrambling, demodulation, layer demapping, channel detection, resource demapping, physical antenna demapping, or radio frequency receiving. The higher-layer functions of the PHY layer may include some functions of the PHY layer. For example, the some functions are closer to the MAC layer. The lower-layer functions of the PHY layer may include another part of functions of the PHY layer. For example, the another part of functions are closer to the radio frequency receiving function. For example, the higher-layer functions of the PHY layer may include addition of CRC code, channel coding, rate matching, scrambling, modulation, and layer mapping, and the lower-layer functions of the PHY layer may include precoding, resource mapping, physical antenna mapping, and radio frequency sending. Alternatively, the higher-layer functions of the PHY layer may include addition of CRC code, channel coding, rate matching, scrambling, modulation, layer mapping, and precoding. The lower-layer functions of the PHY layer may include resource mapping, physical antenna mapping, and radio frequency sending. For example, the higher-layer functions of the PHY layer may include CRC check, channel decoding, de-rate matching, decoding, demodulation, and layer demapping, and the lower-layer functions of the PHY layer may include channel detection, resource demapping, physical antenna demapping, and radio frequency receiving. Alternatively, the higher-layer functions of the PHY layer may include CRC check, channel decoding, de-rate matching, decoding, demodulation, layer demapping, and channel detection, and the lower-layer functions of the PHY layer may include resource demapping, physical antenna demapping, and radio frequency receiving.

For example, the functions of the CU may be implemented by one entity, or may be implemented by different entities. For example, the functions of the CU may be further divided, that is, separation of a control plane and a user plane is performed and the functions of the CU are implemented by different entities, which are a control plane CU entity (namely, a CU-CP entity) and a user plane CU entity (namely, a CU-UP entity). The CU-CP entity and the CU-UP entity may be coupled to the DU, to jointly complete functions of the access network device.

Optionally, any one of the DU, the CU, the CU-CP, the CU-UP, and the RU may be a software module, a hardware structure, or a combination of a software module and a hardware structure. This is not limited. Different entities may exist in different forms. This is not limited. For example, the DU, the CU, the CU-CP, and the CU-UP are software modules, and the RU is a hardware structure. These modules and methods performed by these modules also fall within the protection scope of this application.

In a possible implementation, the access network device includes the CU-CP, the CU-UP, the DU, and the RU. For example, this application is executed by the DU, or the DU and the RU, or the CU-CP, the DU, and the RU, or the CU-UP, the DU, and the RU. This is not limited. Methods performed by the modules also fall within the protection scope of this application.

The terminal may also be referred to as a terminal device, user equipment (user equipment, UE), a mobile station, a mobile terminal, or the like. The terminal is widely used in communication in various scenarios, for example, including but not limited to at least one of the following scenarios: device-to-device (device-to-device, D2D), vehicle-to-everything (vehicle-to-everything, V2X), machine-type communication (machine-type communication, MTC), internet of things (internet of things, IOT), virtual reality, augmented reality, industrial control, autonomous driving, telemedicine, a smart grid, smart furniture, smart office, a smart wearable, smart transportation, a smart city, or the like. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in this application.

In this application, an apparatus configured to implement the functions of the terminal may be a terminal; or may be an apparatus, for example, a chip system, a hardware circuit, a software module, or a combination of a hardware circuit and a software module, that can support the terminal in implementing the functions, where the apparatus may be installed in the terminal or may be used together with the terminal. For ease of descriptions, the following describes the technical solutions provided in this application by using an example in which the apparatus configured to implement the functions of the terminal is UE.

The base station and the terminal may be fixed or movable. The base station and/or the terminal may be deployed on the land, including an indoor or outdoor scenario, and a handheld or vehicle-mounted scenario; or may be deployed on the water; or may be deployed on an airplane, a balloon, and an artificial satellite in the air. Application scenarios of the base station and the terminal are not limited in this application. The base station and the terminal may be deployed in a same scenario or different scenarios. For example, the base station and the terminal are both deployed on the land. Alternatively, the base station is deployed on the land, and the terminal is deployed on the water. Examples are not described one by one.

Roles of the base station and the terminal may be relative. For example, the helicopter or uncrewed aerial vehicle 120i in FIG. 1 may be configured as a mobile base station. For the terminal 120j that accesses the radio access network 100 through 120i, the terminal 120i is a base station; while 120i is a terminal for the base station 110a. In other words, 110a and 120i communicate with each other based on a radio air interface protocol. 110a and 120i may alternatively communicate with each other based on an interface protocol between base stations. In this case, relative to 110a, 120i is also a base station. Therefore, both the base station and the terminal may be collectively referred to as a communication apparatus, 110a and 110b in FIG. 1 may be referred to as a communication apparatus having a base station function, and 120a to 120j in FIG. 1 may be referred to as a communication apparatus having a terminal function.

Communication between the base station and the terminal, between the base stations, and between the terminals may be performed based on a licensed spectrum, or may be performed based on an unlicensed spectrum, or may be performed based on both the licensed spectrum and the unlicensed spectrum. Communication may be performed based on a spectrum below 6 gigahertz (gigahertz, GHz), or may be performed based on a spectrum above 6 GHz, or may be performed based on both the spectrum below 6 GHz and the spectrum above 6 GHz. A spectrum resource used for wireless communication is not limited in this application.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal may establish a wireless connection to a cell controlled by the base station. The cell that establishes a wireless connection to the terminal is referred to as a serving cell of the terminal. When communicating with the serving cell, the terminal may be interfered by a signal from a neighboring cell.

Compared with the fourth generation mobile communication system, the fifth generation mobile communication system has stricter requirements on network performance indicators. For example, a capacity is increased by 1000 times, a coverage area is wider, and ultra-high reliability and an ultra-low delay are required. Considering that high-frequency carrier frequency resources are abundant, high-frequency small cell networking becomes increasingly popular in hotspot areas to meet ultra-high capacity requirements of 5G. High-frequency carriers have poor transmission characteristics, severe attenuation due to blocking, and a small coverage area. Therefore, a large quantity of small cells need to be deployed intensively. Correspondingly, providing fiber backhaul for the large quantity of small cells that are deployed intensively needs high costs and has great difficulty in construction. Therefore, an economical and convenient backhaul solution is needed. In addition, from the perspective of wide coverage requirements, to provide network coverage in some remote areas, fiber deployment is difficult and needs high costs. Therefore, a flexible and convenient access and backhaul solution also needs to be designed. An integrated access and backhaul (integrated access and backhaul, IAB) technology provides a solution to resolve the foregoing two problems. A wireless transmission solution is used for both access links (access links) and backhaul links (backhaul links) of the IAB technology, reducing optical fiber deployment.

As shown in FIG. 2, an IAB network includes a UE, an IAB-node (IAB-node), a donor (IAB-donor), and the like. The IAB-node, also referred to as a relay node (relay node, RN), may provide a wireless access service for the UE. Service data of the UE is transmitted to the donor node through a wireless backhaul link by the IAB-node, and is transmitted to a core network via the donor node. The IAB-node includes a mobile termination (mobile termination, MT) part and a DU part. In the case of orientation to a parent node, the IAB-node may serve as a terminal device, namely, a role of an MT. In the case of orientation to a child node of the IAB-node, the IAB-node is considered as a network device, namely, a role of the DU, and the child node may be another IAB-node or a common UE. A CU part of the IAB network is located in the donor node. For example, for an IAB-DU node and an IAB-MT node in a same IAB-node, it may be considered that the IAB-DU node and the IAB-MT node are bound to each other.

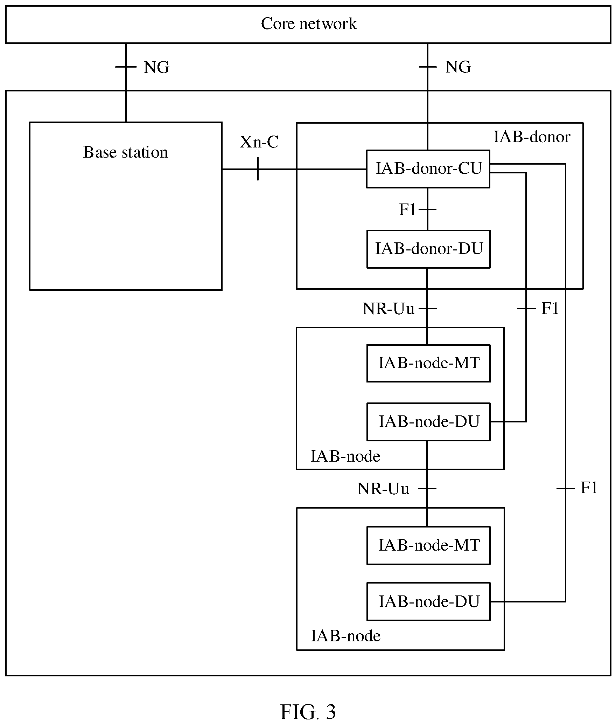

As shown in FIG. 3, a network architecture is provided. The network architecture includes a core network, for example, a 5G core network, an IAB-donor (donor) node, and IAB-nodes. Optionally, the network architecture may further include a base station, and the base station may be a gNodeB or the like in 5G.

The IAB-donor node and the base station may be connected to the core network through NG interfaces. An interface between the IAB-donor node and the base station may be an Xn-C. The IAB-donor node includes a CU and a DU, an interface between the CU and the DU is an F 1 interface, and the CU and the DU may be respectively referred to as an IAB-donor-CU and an IAB-donor-DU. The IAB-node includes an IAB-MT and an IAB-DU, and the IAB-MT and the IAB-DU may be respectively referred to as an IAB-node-MT and an IAB-node-DU. The IAB-node-DU is logically connected to the IAB-donor-CU through an F1 interface. Actually, the connection between the IAB-node-DU and the IAB-donor-CU is implemented through a new radio (new radio, NR) Uu interface between the IAB-node-MT and a parent node DU at each hop. However, because the IAB-node-DU finally can communicate with the IAB-donor-CU, it may be considered that the F1 interface logically exists, and the IAB-node-DU and the IAB-donor-CU exchange control plane information, user plane information, and the like through the F1 interface. In other words, in this application, the IAB-node may directly communicate with the IAB-donor node, or the IAB-node may communicate with the IAB-donor node through the parent node. There may be one or more parent nodes. Each time the parent node is passed through, it may be considered as one hop. For example, in the example in FIG. 3, an IAB-node at a bottom layer communicates with the IAB-donor node via a parent IAB-node at an upper-layer of the IAB-node at the bottom layer.

In this application, the IAB-node may be a node configured to provide a wireless backhaul service for a child node or a UE. The IAB-donor node may be a base station that supports the IAB-node, and may include the IAB-donor-CU and at least one IAB-donor-DU. The IAB-donor-CU may further include an IAB-donor-CU-CP, at least one IAB-donor-CU-UP, and the like.

An IAB technology is first introduced in the 3rd generation partnership project (3rd generation partnership project, 3GPP) release (release) 16 standard. This specifies a user plane and control plane protocol stack of an IAB network, an integration and migration process in the network, operations, administration, and maintenance (operations, administration, and maintenance, OAM), routing and bearer mapping, flow control, and the like. The IAB technology is further enhanced in the 3GPP release (release) 17, and main evolution directions include optimization in aspects such as robustness, a load balancing degree, frequency efficiency, a multi-hop delay, and end-to-end performance. Mobility of the IAB-node is not considered in both the release 16 and the release 17. However, in the release (release) 18, mobility enhancement is performed on the IAB technology, for example, group handover enhancement of a mobile UE, resource conflict resolution with consideration of mobility, and IAB-node configuration with consideration of mobility. This application focuses on a mobile IAB scenario, for example, a vehicle-mounted mobile IAB scenario, and provides a communication method. The following describes basic concepts and functions of tracking area information.

A tracking area (tracking area, TA) is a concept defined in an NR system for location management of a UE, and the TA is a cell-level configuration. A plurality of cells may be configured with a same TA, but one cell may belong to only one TA. When the UE registers with a network, a core network allocates one UE registration area (registration area) to each UE. The UE registration area includes a tracking area identity (tracking area identity, TAI) list. The TAI list includes at least one TAI, and each TAI includes a public land mobile network (public land mobile network, PLMN) and a tracking area code (tracking area code, TAC), that is, TAI=PLMN+TAC. An IAB-DU in an IAB-node may include the TAC in a broadcast system information block 1 (system information block 1, SIB 1). When moving to a cell not belonging to the TAI list, the UE actively accesses the network (including the core network), and performs non-access stratum (non-access stratum, NAS) registration update. The core network registers a location of the UE, updates the registration area of the UE, and reassigns a TAI list including a TAI to which a cell in which the UE is currently located belongs to the UE. The newly allocated TAI list may include some TAIs in the original TAI list, or may not include some TAIs in the original TAI list. This is not limited. In addition, the UE periodically performs tracking area update (tracking area update, TAU), so that the core network obtains the location of the UE. In other words, when the UE registers with the network, the core network allocates one TAI list to the UE. The TAI list includes at least one TAI, and each TAI includes a PLMN and a TAC. When the UE moves to each cell, an IAB-DU in an IAB-node corresponding to the cell periodically broadcasts the TAC. When the broadcast TAC does not belong to a pre-allocated TAI list, the UE performs TAU, and reports a current new TAC to a core network device, so that the core network obtains a location of the UE. In addition to the TAC, a concept of a "radio access network (radio access network, RAN)-based notification area (RAN-based notification area, RNA)" smaller than a TA range is introduced into the NR system for a UE in an RRC inactive (RRC inactive) state, to further reduce transmission overheads of a paging message. The RNA is managed by a gNodeB. The gNodeB may page the UE based on the RNA to find the UE. The paging may be referred to as RAN paging. When the UE enters the inactive state, a last serving (last serving) gNodeB allocates one RNA identity (identity, ID) to the UE. The RNA ID includes the TAC and a RAN area code (area code). Similar to a TAU process, after the UE performs cell reselection, if finding that an RNA ID of a new cell is different from an RNA ID that is obtained by the UE most recently, the UE uses the current new RNA ID, and notifies the gNodeB to update the RNA ID. A function of the RNA is similar to that of the TAC. The TAC is used for core network-level UE tracking, and is oriented to a UE in an idle state. The RNA ID is used for RAN-level UE tracking, and is oriented to a UE in an inactive state.

In a design, the IAB-node is considered to be deployed on a public transport vehicle such as a subway or a bus, to serve UE in a vehicle, to overcome a high path loss caused as wireless signals pass through vehicle carriages, so as to improve quality of service. However, because a UE outside the vehicle has high dynamicity relative to the vehicle, the UE outside the vehicle usually does not need to access the mobile IAB-node, but directly accesses a ground base station. For example, the UE in the vehicle is connected to the mobile IAB-node through an NR Uu interface, and the UE outside the vehicle is connected to a cell with best signal quality in the ground base station through the NR Uu interface. In this application, it is considered that the IAB-node is deployed in a mobile vehicle. In this case, an MT part in the mobile IAB-node performs cell handover according to a handover rule of the UE, and establishes an RRC connection to a CU part in a donor node of a target cell. A DU part in the mobile IAB-node also establishes an F1 interface with the CU part in the donor node of the target cell.

In a current standard, it is considered that the IAB-node is static, and the OAM statically configures the TAC broadcast by the IAB-DU, and in this case, the following problem may occur. For example, when the IAB-node is located at an initial location and accesses a first cell, the OAM statically configures, based on a TAC corresponding to the first cell, the TAC broadcast by the IAB-DU for the IAB-node. For example, the TAC broadcast by the IAB-DU is configured to be consistent with the TAC corresponding to the first cell accessed by the IAB-node, and may be referred to as a TAC 1. When the IAB-node moves and accesses a second cell, because the OAM statically configures the TAC broadcast by the IAB-DU, the IAB-DU still broadcasts the TAC 1 when the IAB-node accesses the second cell. When receiving the TAC 1 broadcast by the IAB-DU, a UE located in a coverage area of a cell provided by the IAB-DU may add the TAC 1 to a TAI list of the UE, and notify the core network. Subsequently, when paging the UE, the core network broadcasts, based on the TAI list of the UE, a paging message in the first cell corresponding to the TAC 1 in the TAIlist. However, it may be learned from the foregoing analysis that, the UE is actually located in the second cell, and consequently, paging performed on the UE fails. For the foregoing problem, a possible solution is as follows. When the IAB-node moves to the second cell, the donor node may perform radio access network (radio access network, RAN) configuration update, add the TAC 1 to a TAI list corresponding to the second cell, and notify the core network. However, in this case, the donor node may frequently perform RAN configuration update, and consequently, communication overheads between the core network and a donor base station are increased.

This application provides a communication method. In the method, when an IAB-DU is located in a first cell, the IAB-DU may obtain a first correspondence between a cell provided by the IAB-DU and tracking area information. The first correspondence is related to the first cell. For example, if the cell provided by the IAB-DU includes a third cell, the first correspondence includes a correspondence between the third cell and the tracking area information. Tracking area information broadcast by the IAB-DU in the third cell is tracking area information that has the first correspondence with the third cell. When migrating from the first cell to a second cell, the IAB-DU node may obtain a second correspondence between the cell provided by the IAB-DU and the tracking area information, where the second correspondence is related to tracking area information of the second cell. For example, if the cell provided by the IAB-DU includes a fourth cell, the second correspondence includes a correspondence between the fourth cell and the tracking area information. Tracking area information broadcast by the IAB-DU in the fourth cell is tracking area information that has the second correspondence with the fourth cell. In this way, when the IAB-DU is located in the first cell, broadcast tracking area information is related to the first cell, and when the IAB-DU moves to the second cell, broadcast tracking area information is related to the second cell. When receiving the tracking area information that is related to the second cell and that is broadcast by the IAB-DU, a UE located in a coverage area of the second cell may add the tracking area information to a TAI list, and report the tracking area information to a core network. When paging the UE, the core network may determine the second cell based on the tracking area information that is related to the second cell and that is included in the TAI list of the UE, and page the UE in the second cell, to ensure a success rate of paging the UE. In addition, because a donor base station and the core network do not need to perform RAN configuration update, communication overheads between the core network and the base station are reduced.

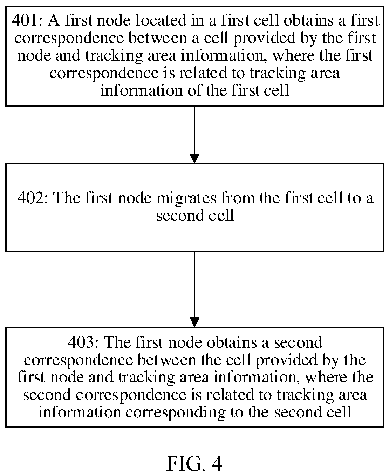

As shown in FIG. 4, a procedure of a communication method is provided. At least the following steps are included.

Step 401: A first node located in a first cell obtains a first correspondence between a cell provided by the first node and tracking area information, where the first correspondence is related to tracking area information of the first cell.

Step 402: The first node migrates from the first cell to a second cell.

Step 403: The first node obtains a second correspondence between the cell provided by the first node and tracking area information, where the second correspondence is related to tracking area information corresponding to the second cell. Optionally, the first correspondence is the same as or different from the second correspondence.

Optionally, the first correspondence or the second correspondence is a correspondence between the cell provided by the first node and the tracking area information. The first correspondence includes at least a correspondence between a third cell provided by the first node and the tracking area information. The second correspondence includes at least a correspondence between a fourth cell provided by the first node and the tracking area information. The third cell is the same as or different from the fourth cell. In the foregoing descriptions, an example in which the first correspondence or the second correspondence includes a correspondence between one cell and the tracking area information is used for description. This is not limited. For example, in an implementation, the first correspondence includes correspondences between n cells and the tracking area information. Refer to Table 1 below. The second correspondence includes correspondences between m cells and the tracking area information. Both n and m are positive integers, and values of n and m are the same or different.

**Table 1: First correspondence**

| Cell provided by the first node | Tracking area information |
|---|---|
| Cell 1 | Tracking area information 1 |
| Cell 2 | Tracking area information 2 |
| ... | ... |
| Cell n | Tracking area information n |

**Table 2: Second correspondence**

| Cell provided by the first node | Tracking area information |
|---|---|
| Cell 1 | Tracking area information 1 |
| Cell 2 | Tracking area information 2 |
| ... | ... |
| Cell m | Tracking area information m |

Optionally, the second cell may be directly or indirectly related to the tracking area information corresponding to the second cell. This is not limited. For example, an association relationship may be directly established between the second cell and the tracking area information corresponding to the second cell. This means that the second cell is directly related to the tracking area information corresponding to the second cell. Alternatively, an association relationship may be established between the second cell and the tracking area information corresponding to the second cell via one or more intermediate media. This means that the association relationship is indirectly established between the second cell and the tracking area information corresponding to the second cell. For example, the second cell is related to an ID of the second cell, and the ID of the second cell is related to the tracking area information corresponding to the second cell. The ID of the second cell is used as an intermediate medium, and the second cell is indirectly related to the tracking area information corresponding to the second cell. Similar to the foregoing descriptions, the first cell may be directly or indirectly related to the tracking area information corresponding to the first cell. Details are not described again.

Optionally, the first node and a second node may be combined into one physical node. To be specific, an IAB-MT and an IAB-DU may be two different logical nodes in a same physical node, and the logical node may be a software module, a functional unit, or the like. Alternatively, an IAB-MT and an IAB-DU may be two different physical nodes belonging to a same IAB-node, or the like. This is not limited.

In a design, when the first node is located in the first cell, another node may send indication information of the first correspondence, indication information of the first cell, or the like to the first node. The first node may determine the first correspondence or the like based on the tracking area information corresponding to the first cell. The another node may be an OAM or the like. The method includes but is not limited to: The OAM in a standard statically configures the first correspondence or the like for the first node. Alternatively, in this application, because the first node may move, and accesses the first cell at an initial location, the OAM may statically configure the first correspondence for the first node. Subsequently, the first node moves, and migrates from the first cell to the second cell. In this case, the first node may obtain the second correspondence related to the second cell. Subsequently, the first node migrates from the second cell to the third cell. In this case, the first node may obtain a third correspondence related to the third cell, or the like. In other words, in this application, when the first node is located in the first cell, the OAM may configure the first correspondence for the first node in the static manner. When moving to a cell other than the first cell, the first node may obtain a correspondence corresponding to the new accessed cell. Alternatively, in this application, each time the first node accesses a cell, the first node obtains, in the following manner, a correspondence corresponding to the cell. In other words, the method described below may be applicable to a process in which the first node obtains the second correspondence, and may be applicable to a process in which the first node obtains the first correspondence. However, subsequently, an example in which the first node obtains the second correspondence is used for description.

In a design, the first node may receive a first message from the second node, where the first message carries indication information of the second correspondence. The first node may obtain the second correspondence based on the first message. Alternatively, the first message may carry the tracking area information of the second cell. The first node determines the second correspondence based on the tracking area information of the second cell. It should be noted that, the second cell is a cell accessed by the first node. The first node may provide the cell, a child node of the first node may access the cell provided by the first node, and the child node of the first child node may include a UE, an IAB-node, or the like. For example, in an implementation, the first node is an IAB-node, and the IAB-node accesses a second cell in a donor node. In this case, the IAB-node may provide a cell, and the provided cell may be accessed by a UE or another IAB-node. In this application, the first node may determine, based on the tracking area information of the first node accessed by the first node, the correspondence between the cell provided by the first node and the tracking area information. It may be understood that, the first node may provide one or more cells, and the correspondence may be a correspondence between one provided cell and the tracking area information. In a possible design, the tracking area information of the cell provided by the first node is set to be consistent with the tracking area information of the second cell. For example, if the tracking area information of the second cell is tracking area information 1, and cells provided by the first node include a cell 21, a cell 22, and a cell 23, tracking area information of the cell 21, tracking area information of the cell 22, and tracking area information of the cell 23 each are set to the tracking area information 1 or the like.

In this application, a process in which the second node obtains the second correspondence or a process in which the second node obtains the tracking area information of the second cell is not limited. For example, the second node may receive a second message from the third node, where the second message includes the tracking area information corresponding to the second cell. The second node may determine the second correspondence or the like based on the tracking area information corresponding to the second cell. Alternatively, the second message may include the indication information of the second correspondence. The second node may directly obtain the second correspondence based on the indication information included in the second message. Alternatively, the second node may report information about the second cell to the third node. The third node obtains, based on the information about the second cell, the tracking area information corresponding to the second cell; and the third node sends, to the second node, the tracking area information corresponding to the second cell. Alternatively, the third node may determine the second correspondence based on the obtained tracking area information corresponding to the second cell, and send the indication information of the second correspondence or the like to the second node. Alternatively, the second node may report location information of the first node to the third node. The location information may be longitude, latitude, a height, and the like of the first node. The third node may obtain, based on the location information of the first node, the second cell serving at the location, further obtain the tracking area information corresponding to the second cell, and determine the second correspondence or the like. The third node may return the tracking area information corresponding to the second cell, the indication information of the second correspondence, or the like to the second node. This is not limited. Alternatively, the first node may report information about the second cell or location information of the first node to the second node. The first node is located in a coverage area of the second cell. The first node obtains, based on the information about the second cell or the location information of the first node, the tracking area information corresponding to the second cell. The second node may determine the second correspondence or the like based on the tracking area information corresponding to the second cell. Alternatively, the second node may determine, based on a cell measurement result, that the first node needs to be handed over from the first cell to the second cell. In this case, the second node may autonomously determine the second correspondence or the like based on the tracking area information corresponding to the second cell.

Optionally, in this application, the first node may further send a notification message to a donor node corresponding to the first node, where the notification message is used to notify the donor node that a correspondence between the cell provided by the first node and the tracking area information has been updated. Optionally, the first node may send the notification message to the donor node when the first correspondence is different from the second correspondence.

In this application, the first node may be an IAB-DU. The second node may be an IAB-node (for example, an IAB-MT),
a donor node (for example, a source donor node or a target donor node), or the like. The third node may be a parent node of the first node, an IAB-MT, an OAM, a donor node, a source donor node, a target donor node, an AMF, or the like. This is not limited. In the descriptions of this application, the tracking area information may be a TAI, a TAC, an RNA ID, or the like. In addition, the tracking area information may further include a cell ID and the like. An example in which the tracking area information is a TAC is used for description below.

### Embodiment 1

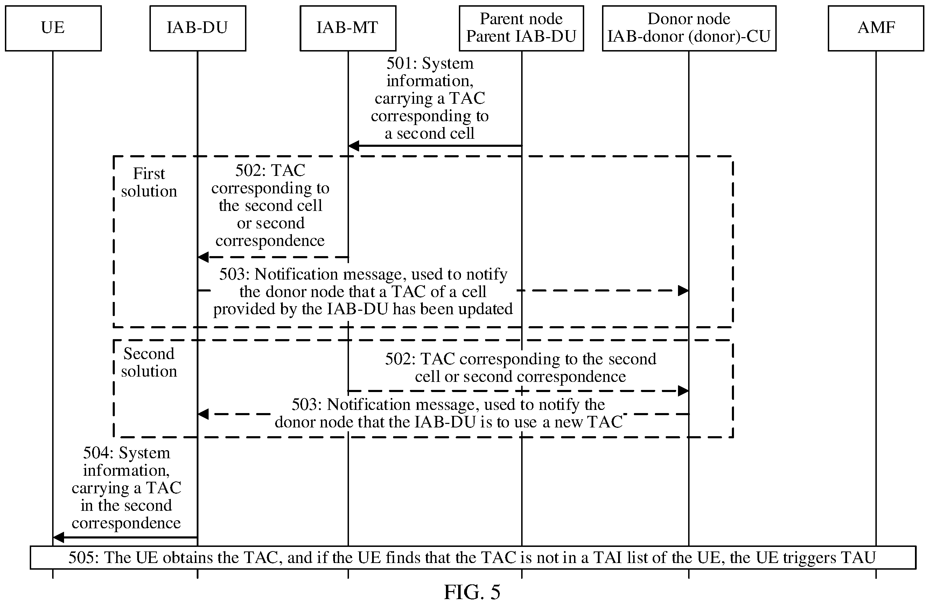

An example in which a first node is an IAB-DU, a second node is an IAB-MT, and a third node is a parent node, or a first node is an IAB-DU, a second node is a donor node, and a third node is an IAB-MT is used. As shown in FIG. 5, a flowchart is provided. In the procedure, the IAB-MT obtains a TAC corresponding to a second cell from a system message of the parent node, and notifies the IAB-DU to broadcast a system message. At least the following steps are included.

Step 501: The IAB-MT receives the system message from the parent node, where the system message may be a SIB 1, and the system message carries the TAC corresponding to the second cell. Optionally, the parent node may be an IAB-DU in the parent node, and may be referred to as a parent IAB-DU.

In a first solution:
Step 502: The IAB-MT sends, to the IAB-DU, the TAC corresponding to the second cell. Alternatively, the IAB-MT determines, based on the TAC corresponding to the second cell, a second correspondence between a cell provided by the IAB-DU and the TAC, and the IAB-MT sends indication information of the second correspondence to the IAB-DU. For example, the IAB-MT may send the TAC corresponding to the second cell or the indication information of the second correspondence to the IAB-DU through an internal interface.

In a design, if the IAB-MT sends, to the IAB-DU, the TAC corresponding to the second cell, the IAB-DU may determine the second correspondence based on the TAC corresponding to the second cell. Alternatively, if the IAB-MT sends the indication information of the second correspondence to the IAB-DU, the IAB-DU may directly obtain the second correspondence based on the indication information. In Embodiment 1, the IAB-MT may determine the second correspondence based on the TAC corresponding to the second cell, or the IAB-DU may determine the second correspondence based on the TAC corresponding to the second cell. The following describes a process of determining the second correspondence based on the TAC corresponding to the second cell.

In this application, an example in which the IAB-DU accesses the second cell is used. The IAB-DU may provide at least one cell, and the cell provided by the IAB-DU may be accessed by an IAB child node, a UE, or the like. A same TAC or different TACs may be set for the at least one cell provided by the IAB-DU. This is not limited. For example, a TAC of each cell provided by the IAB-DU may be set to the TAC corresponding to the second cell. For example, the TAC corresponding to the second cell is a TAC 2, and cells provided by the IAB-DU include a cell 21, a cell 22, and a cell 23. TACs of the cell 21, the cell 22, and the cell 23 that are provided by the IAB-DU may all be set to the TAC 2. Alternatively, another TAC, for example, a TAC of a neighboring cell of the second cell, may be determined based on the TAC corresponding to the second cell. The TAC of the cell provided by the IAB-DU is set to be consistent with the TAC of the neighboring cell of the second cell, or the like. This is not limited.

Step 503: The IAB-DU sends a notification message to the donor node, where the notification message is used to notify the donor node that the TAC of the IAB-DU has been updated. For example, the IAB-DU may send an F1 interface control (F1AP) message to the donor node, where the F1AP message carries indication information indicating that the TAC of the IAB-DU has been updated, and the like. Optionally, the donor node may be an IAB-DU in the donor node, and may be referred to as an IAB-donor-CU. Step 503 is optional. In other words, the IAB-DU may not send the notification message to the donor node.

Step 504: The IAB-DU broadcasts a system message, where the system message may be a SIB 1, and the system message carries the TAC that corresponds to the cell provided by the IAB-DU and that is in the second correspondence.

For example, as described above, the IAB-DU may provide the at least one cell, and each cell may correspond to a same TAC or a different TAC. In a design, if all cells provided by the IAB-DU correspond to a same TAC, the IAB-DU may directly broadcast the TAC in any provided cell. If different cells provided by the IAB-DU correspond to different TACs, and the TACs are not completely the same, the IAB-DU may broadcast, in the different cells respectively, the TACs corresponding to the different cells. For example, if the cells provided by the IAB-DU include the cell 21, the cell 22, and the cell 23, the IAB-DU may broadcast, in the cell 21, a TAC corresponding to the cell 21, broadcast, in the cell 22, a TAC corresponding to the cell 22, broadcast, in the cell 23, a TAC corresponding to the cell 23, and the like.

Step 505: The UE obtains the TAC based on the system message.

For example, if finding that the TAC broadcast by the IAB-DU does not belong to a TAI list of the UE, the UE may trigger a TAU process. For example, in the TAU process, the UE may report, to a core network, the TAC received from the IAB-DU, and the core network reallocates one TAI list to the UE based on the reported TAC. The TAI list includes at least the TAC reported by the UE, and the like, so that the core network can obtain a location of the UE. In this way, the UE may be paged by the core network.

It should be noted that, in this application, in a process of step 502 to step 504, each execution body may directly perform the foregoing steps, or may perform corresponding steps when some conditions are met. For example, for step 502, the IAB-MT may determine whether the TAC corresponding to the second cell is the same as a TAC corresponding to a first cell, whether the second correspondence is the same as a first correspondence, or the like. If the TAC corresponding to the second cell is different from the TAC corresponding to the first cell, the second correspondence is different from the first correspondence, or the like, the IAB-MT sends the TAC corresponding to the second cell or the indication information of the second correspondence to the IAB-DU. If the TAC corresponding to the second cell is the same as the TAC corresponding to the first cell, the second correspondence is the same as the first correspondence, or the like, the IAB-MT does not perform step 502. The TAC corresponding to the first cell may be considered as a TAC carried in the broadcast message received by the IAB-MT from the parent node in a previous period. Alternatively, for step 504, the IAB-DU may determine whether the second correspondence is the same as the first correspondence. If the second correspondence is different from the first correspondence, the IAB-DU sends the notification message to the donor node in step 504. If the second correspondence is the same as the first correspondence, the IAB-DU does not perform step 504 or the like. The first correspondence may be a first correspondence determined based on the TAC in the system message broadcast by the parent node in the previous period.

In a second solution:
Step 502: The IAB-MT sends the TAC corresponding to the second cell or indication information of a second correspondence to the donor node. For example, the IAB-MT may send an RRC message to the donor node, where the RRC message carries the TAC corresponding to the second cell or the indication information of the second correspondence.

Step 503: The donor node sends a notification message to the IAB-DU, where the notification message is used to notify the donor node that the IAB-DU is to use a new TAC, namely, the TAC corresponding to the second cell, or notify the IAB-DU to use a new correspondence, namely, the second correspondence. For example, the donor node may send an F1AP message to the IAB-DU, where the F1AP message carries the TAC corresponding to the second cell, the indication information of the second correspondence, or the like.

In this application, in a process of step 502 and step 503, each execution body may directly perform corresponding steps, or perform corresponding steps when some conditions are met. For example, for step 502, the IAB-MT may determine whether the TAC corresponding to the second cell is the same as a TAC corresponding to a first cell. If the TAC corresponding to the second cell is different from the TAC corresponding to the first cell, the IAB-MT sends the RRC message to the donor node, where the RRC message is used to notify the donor node of the TAC corresponding to the second cell. Alternatively, the IAB-MT may determine the second correspondence based on the TAC that corresponds to the second cell and that is obtained from the broadcast message of the parent node; and determine whether the second correspondence is the same as a first correspondence. If the second correspondence is different from the first correspondence, the IAB-MT sends the RRC message to the donor node. The RRC message includes the indication information of the second correspondence, where the indication information of the second correspondence is used to notify the donor node of the second correspondence. Alternatively, for step 503, when receiving the TAC corresponding to the second cell or the second correspondence, the donor node may determine whether the second correspondence is the same as the first correspondence that is between a cell provided by the IAB-DU and the TAC and that is maintained by the donor node. If the second correspondence is different from the first correspondence, the donor node sends the notification message, to notify the IAB-DU to use the TAC corresponding to the second cell, the second correspondence, or the like. Alternatively, the donor node may determine whether a TAC corresponding to the IAB-DU is maintained. If the TAC corresponding to the IAB-DU is not maintained, it is determined that the IAB-DU is just handed over to the donor node, and the donor node may also send the notification message to the IAB-DU, to notify the IAB-DU to use the TAC corresponding to the second cell, the second correspondence, or the like. In this case, the donor node may add the second correspondence corresponding to the IAB-DU to a maintained TAI list, and the like.

Step 504: The IAB-DU broadcasts a system message, where the system message includes the TAC that corresponds to the cell provided by the IAB-DU and that is in the second correspondence.

Step 505: A UE obtains the TAC based on the broadcast message. If finding that the TAC broadcast by the IAB-DU does not belong to a TAI list of the UE, the UE may trigger a TAU process.

In Embodiment 1, the IAB-MT notifies the IAB-DU of the TAC corresponding to the second cell or the second correspondence by using the first solution and the second solution. In the first solution, the IAB-MT notifies the IAB-DU bound to the IAB-MT of the TAC corresponding to the second cell or the second correspondence through the internal interface. If determining that the second correspondence needs to be updated, the IAB-DU notifies the donor node through an F1AP interface, and directly updates the system message, and broadcasts an updated system message. In the second solution, the IAB-MT first notifies the donor node of the TAC corresponding to the second cell or the second correspondence via the RRC message. If determining that the TAC or the correspondence needs to be updated, the donor node sends the F1AP message to the IAB-DU, and configures the IAB-DU to perform update and broadcast based on a configuration. After receiving an indication from the donor node, the IAB-DU updates the system information and broadcasts the updated system message, so that the TAC broadcast by the IAB-DU is related to the TAC of the current accessed cell. This ensures a success rate of paging a served UE in a coverage area of the IAB-DU.

In Embodiment 1, the IAB-MT obtains the TAC corresponding to the second cell from the system message broadcast by the parent node. The IAB-MT directly notifies the IAB-DU of the TAC corresponding to the second cell or the second correspondence, or notifies the donor of the TAC corresponding to the second cell or the second correspondence via the RRC message, and then the donor notifies the IAB-DU of the TAC corresponding to the second cell or the second correspondence via the F1AP, so that the IAB-DU may obtain the TAC of the accessed cell, to update the system message and broadcast the updated system message. This ensures the success rate of paging the served UE in the coverage area of the IAB-DU.

### Embodiment 2

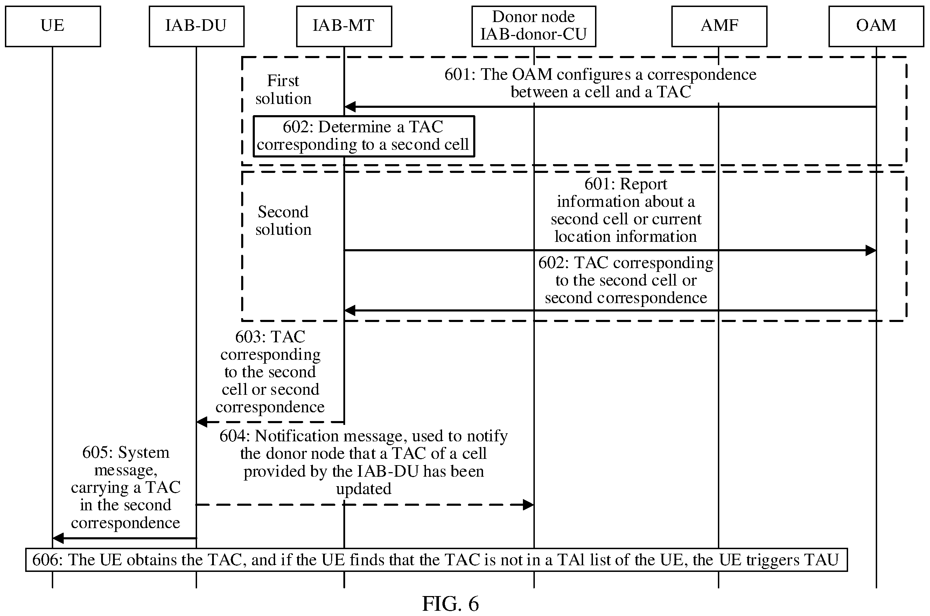

An example in which a first node is an IAB-DU, a second node is an IAB-MT, and a third node is an OAM is used. As shown in FIG. 6, a flowchart is provided. At least the following steps are included.

In a first solution, in descriptions of this application, the OAM may also be referred to as an OAM server. The IAB-MT obtains correspondences between different cells and a TAC from the OAM server, obtains, based on the correspondences between the different cells and the TAC, a TAC corresponding to a second cell, and notifies the IAB-DU of the TAC corresponding to the second cell, or determines a second correspondence based on the TAC corresponding to the second cell, and notifies the IAB-DU. The IAB-DU updates a system message and broadcasts an updated system message. For an application scenario of the procedure in FIG. 6, an IAB-node is a mobile IAB-node deployed in a bus, a subway, a high-speed railway, or the like on a fixed route, and the OAM may determine, based on the preset movement route, a coverage cell of a base station along the route. A correspondence between the cell and the TAC is configured for the IAB-MT and the like.

Step 601: The OAM server sends configuration information to the IAB-MT, where the configuration information is used to configure the correspondence between the cell and the TAC, and the configuration information includes at least a correspondence between the second cell and the TAC.

Step 602: The IAB-MT determines, based on the correspondence, the TAC corresponding to the second cell.

Step 603: The IAB-MT sends the TAC corresponding to the second cell or indication information of the second correspondence to the IAB-DU. For example, the IAB-MT notifies the IAB-DU of the TAC corresponding to the second cell, the indication information of the second correspondence, or the like through an internal interface.

Optionally, the IAB-MT may determine whether the TAC corresponding to the second cell is the same as a TAC corresponding to a first cell, or determine whether the second correspondence is the same as a first correspondence. If the TAC corresponding to the second cell is the same as the TAC corresponding to the first cell, or the second correspondence is the same as the first correspondence, the IAB-MT notifies the IAB-DU bound to the IAB-MT of the TAC corresponding to the second cell or the second correspondence through the internal interface. Alternatively, the IAB-MT may directly notify the IAB-DU or the like of the TAC corresponding to the second cell or the second correspondence without performing determining.

Step 604: The IAB-DU sends a notification message to a donor node, where the notification message is used to notify the donor node that the TAC of the cell provided by the IAB-DU has been updated. Optionally, the donor node may be an IAB-donor-CU. Step 604 is optional. In other words, the IAB-DU may not send the notification message to the donor node.

Optionally, the IAB-DU may determine whether the TAC in the second correspondence that is obtained by the IAB-DU is consistent with the currently broadcast TAC. If the TAC in the second correspondence that is obtained by the IAB-DU is inconsistent with the currently broadcast TAC, the IAB-DU sends an F1AP message to the donor node, where the F1AP message carries the TAC corresponding to the second cell or the indication information of the second correspondence, to notify the donor node that the IAB-DU is to use a new TAC. Alternatively, the IAB-DU may directly send an F1AP message to the donor node without performing determining, where the F1AP message carries the TAC corresponding to the second cell or the indication information of the second correspondence.

Step 605: The IAB-DU broadcasts the system message, where the system message includes the TAC that corresponds to the cell provided by the IAB-DU and that is in the second correspondence.

Step 606: A UE obtains the TAC based on the system message. Optionally, if finding that the TAC broadcast by the IAB-DU does not belong to a TAC list, the UE triggers a TAU process.

In this application, if a TAC configured by the OAM server for the IAB-MT is determined based on the movement route of the, a TAI list sent by a core network device, for example, an AMF, to the UE may include all TAIs on the trajectory IAB-node, to reduce TAU of the UE in a vehicle.

In a second solution:
Step 601: The IAB-MT reports information about a second cell or current location information to the OAM server, where the current location information may be information such as latitude, longitude, and a height of a location at which the IAB-DU is located.

Step 602: The OAM server sends a TAC corresponding to the second cell or a second correspondence to the IAB-MT.

For example, when receiving the information about the second cell reported by the IAB-MT, the OAM server may determine, based on the information about the second cell, the TAC corresponding to the second cell. Alternatively, the OAM server may determine, based on the current location information reported by the IAB-MT, the second cell covering the reported location, and determine the TAC corresponding to the second cell, and the like. Optionally, the OAM server determines the second correspondence based on the TAC corresponding to the second cell.

Step 603: The IAB-MT sends the TAC corresponding to the second cell, indication information of the second correspondence, or the like to the IAB-DU.

Step 604: The IAB-DU sends a notification message to a donor node, where the notification message is used to notify the donor node that a TAC of a cell provided by the IAB-DU has been updated. Optionally, the donor node may be an IAB-donor-CU. Step 604 is optional. In other words, the IAB-DU may not send the notification message to the donor node.

Step 605: The IAB-DU broadcasts a system message, where the system message includes the TAC that corresponds to the cell provided by the IAB-DU and that is in the second correspondence.

Step 606: A UE obtains the TAC based on the system message. Optionally, if finding that the TAC broadcast by the IAB-DU does not belong to a TAC list, the UE triggers a TAU process.

In the first solution, the IAB-MT obtains the correspondences between the different cells and the TAC from the OAM server, obtains the TAC corresponding to the second cell or the second correspondence based on the currently accessed second cell, and notifies the IAB-DU of the TAC corresponding to the second cell or the second correspondence, so that the IAB-DU updates the system message and broadcasts the updated system message. Alternatively, in the second solution, the IAB-MT reports the information about the second cell or the current location information to the OAM server. The OAM server feeds back the TAC corresponding to the second cell or the second correspondence to the IAB-MT, so that the IAB-DU updates a system message and broadcasts the updated system message.

It should be noted that, in the first solution, the OAM server configures TACs of a plurality of cells for the IAB-MT. For the mobile IAB-node on the bus, the high-speed railway, the subway, or the like on the fixed trajectory, the OAM server may directly configure the correspondence between the cell on the movement route and the TAC for the IAB-MT. If the TAC configured by the OAM for the IAB-MT is based on the trajectory, for a TAU process related to the trajectory, a new TAI list sent by the AMF to the UE may include all the TAIs on the trajectory, to reduce TAU frequency of the UE in a vehicle.

### Embodiment 3

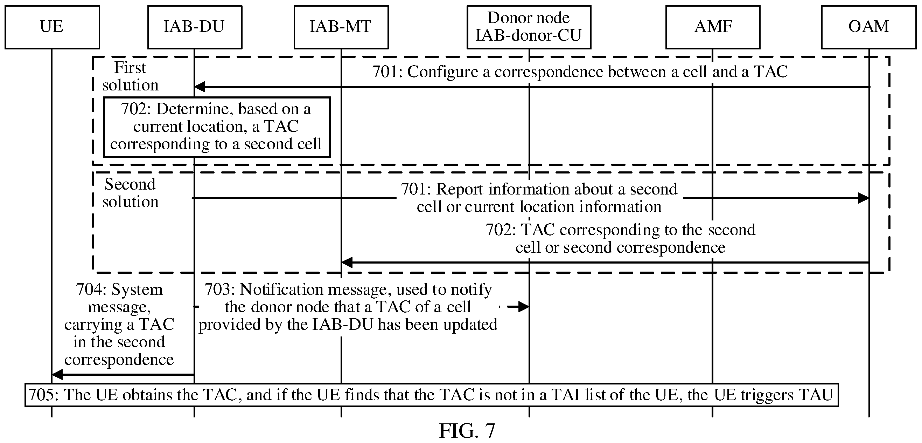

Embodiment 3 is similar to Embodiment 2, and differences are as follows. In Embodiment 2, the IAB-MT first obtains the TAC from the OAM server, and then notifies the IAB-DU. In Embodiment 3, an IAB-DU directly obtains a TAC from an OAM server. As shown in FIG. 7, a flowchart is provided. At least the following steps are included.

In a first solution:
Step 701: The OAM server sends configuration information to the IAB-DU, where the configuration information is used to configure a correspondence between a cell and the TAC.

Step 702: The IAB-DU determines, based on correspondences between different cells and the TAC, a TAC corresponding to a second cell.

Step 703: The IAB-DU sends a notification message to a donor node, where the notification message is used to notify the donor node that a TAC of a cell provided by the IAB-DU has been updated. Optionally, the donor node may be an IAB-donor-CU. Step 703 is optional. In other words, the IAB-DU may not send the notification message to the donor node.

Step 704: The IAB-DU broadcasts a system message, where the system message includes the TAC that corresponds to the cell provided by the IAB-DU and that is in a second correspondence.

Step 705: A UE obtains the TAC based on the system message. Optionally, if finding that the TAC broadcast by the IAB-DU does not belong to a TAC list, the UE triggers a TAU process.

In a second solution:
Step 701: The IAB-DU reports information about a second cell or current location information to the OAM server.

Step 702: The OAM server sends, to the IAB-DU, a TAC corresponding to the second cell or a second correspondence.

For example, the OAM server receives the information about the second cell or the current location information reported by the IAB-DU, where the current location information is located in a coverage area of the second cell. The OAM server determines, based on the information about the second cell or the current location information, the TAC corresponding to the second cell. The IAB-DU determines the second correspondence based on the TAC corresponding to the second cell. Alternatively, the OAM server determines the second correspondence based on the TAC corresponding to the second cell, and directly sends indication information of the second correspondence and the like to the IAB-DU.

Step 703: The IAB-DU sends a notification message to a donor node, where the notification message is used to notify the donor node that a TAC of a cell provided by the IAB-DU has been updated. Optionally, the donor node may be an IAB-donor-CU. Step 703 is optional. In other words, the IAB-DU may not send the notification message to the donor node.

Step 704: The IAB-DU broadcasts a system message, where the system message includes the TAC that corresponds to the cell provided by the IAB-DU and that is in the second correspondence.

Step 705: A UE obtains the TAC based on the system message. Optionally, if finding that the TAC broadcast by the IAB-DU does not belong to a TAC list, the UE triggers a TAU process.

In Embodiment 3, the IAB-DU directly obtains TAC information from the OAM server, and the TAC information does not need to be forwarded by the IAB-MT. This reduces signaling overheads. In addition, in Embodiment 3, the IAB-DU may also update a system message and broadcast the updated system message. In a TAU process of the UE, if a new TAI list sent by an AMF to the UE includes all TAIs on a trajectory, TAU frequency of the UE in a vehicle may be reduced.

### Embodiment 4

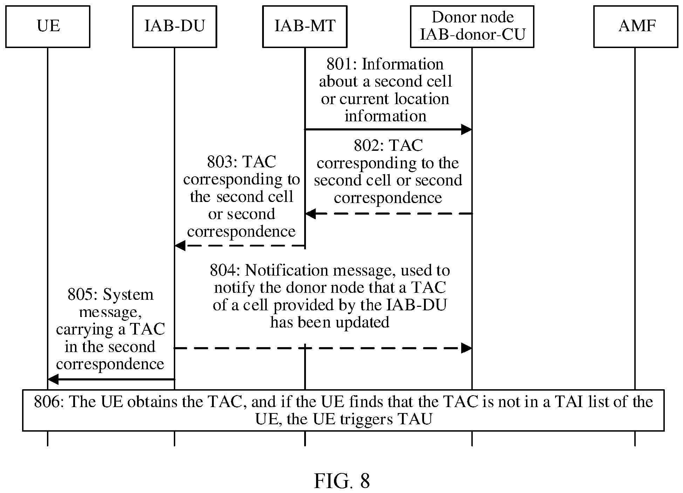

Differences between Embodiment 4 and Embodiment 2 are as follows. A donor node maintains a correspondence between a cell and tracking area information, an IAB-MT reports information about a second cell or current geographical location information to the donor node, and the donor node notifies the IAB-MT of a TAC corresponding to the second cell or a second correspondence. The IAB-MT notifies an IAB-DU to update a system message and broadcast an updated system message. As shown in FIG. 8, a flowchart is provided. At least the following steps are included.

Step 801: The IAB-MT reports the information about the second cell or the current location information to the donor node.

Optionally, the donor node may be an IAB-donor-CU. The IAB-MT may send an RRC message to the donor node, where the RRC message includes the information about the second cell or the current location information. Optionally, the donor node may be a CU in the donor node, and may be referred to as the IAB-donor-CU.

Step 802: The donor node sends the TAC corresponding to the second cell or indication information of the second correspondence to the IAB-MT.

For example, the donor node may send an RRC message to the IAB-MT, where the RRC message carries tracking area information corresponding to the second cell or the indication information of the second correspondence.

Similar to the second solution in Embodiment 2, when receiving the information about the second cell reported by the IAB-MT, the donor node may determine, based on the information about the second cell, the TAC corresponding to the second cell, and the donor node sends the TAC corresponding to the second cell. Alternatively, when receiving the current location information reported by the IAB-MT, the donor node determines the second cell covering the current location, determines, based on the information about the second cell, the TAC corresponding to the second cell, and notifies the IAB-MT. Alternatively, the donor node may determine the second correspondence based on the information about the second cell, and directly notify the IAB-MT of the second correspondence or the like. This is not limited.

Optionally, the donor node may determine whether the current second correspondence is the same as a first correspondence maintained by the donor node. If the current second correspondence is different from the first correspondence, step 802 is performed. If the current second correspondence is the same as the first correspondence, step 802 is not performed. In other words, the donor node notifies the IAB-MT only when determining that a TAC of a cell provided by the IAB-DU changes, and does not notify the IAB-MT when the TAC of the cell provided by the IAB-DU remains unchanged. Alternatively, in this application, the donor node does not perform the foregoing determining, and when receiving a trigger in step 801, directly notifies the IAB-DU of the TAC corresponding to the second cell or the second correspondence.

Step 803: The IAB-MT sends the TAC corresponding to the second cell or the indication information of the second correspondence to the IAB-DU.

Optionally, the IAB-MT may determine whether the TAC corresponding to the second cell is the same as a TAC corresponding to a first cell, or determine whether the second correspondence is the same as a first correspondence. If the TAC corresponding to the second cell is different from the TAC corresponding to the first cell, or the second correspondence is different from the first correspondence, the IAB-MT notifies the IAB-DU bound to the IAB-MT of the TAC corresponding to the second cell or the second correspondence. Alternatively, the IAB-MT may directly notify the IAB-DU of the TAC corresponding to the second cell or the second correspondence without performing a determining process.

Step 804: The IAB-DU sends a notification message to the donor node, where the notification message is used to notify the donor node that the TAC of the cell provided by the IAB-DU has been updated. Optionally, the donor node may be an IAB-donor-CU. Step 804 is optional. In other words, the IAB-DU may not send the notification message to the donor node.

Optionally, the IAB-DU may determine whether the TAC in the second correspondence that is obtained by the IAB-DU is consistent with the currently broadcast TAC. If the TAC in the second correspondence that is obtained by the IAB-DU is inconsistent with the currently broadcast TAC, the IAB-DU sends an F1AP message to the donor node, where the F1AP message carries the TAC corresponding to the second cell or the second correspondence, to notify the donor node that the IAB-DU is to use a new TAC. Alternatively, the IAB-DU may directly send the notification message to the donor node without performing determining. Optionally, the IAB-DU may send the F1AP message to the donor, where the F1AP message carries the TAC corresponding to the second cell or the indication information of the second correspondence.

Step 805: The IAB-DU broadcasts a system message, where the system message includes the TAC that corresponds to the cell provided by the IAB-DU and that is in the second correspondence.

Step 806: A UE obtains the TAC based on the system message. Optionally, if finding that the TAC broadcast by the IAB-DU is not located in or does not belong to a TAC list, the UE triggers a TAU process.

In Embodiment 4, the IAB-MT reports the information about the second cell or the current location information to the donor node, and the donor node determines, depending on whether the TAC corresponding to the first cell is the same as the TAC corresponding to the second cell, whether the first correspondence is the same as the second correspondence, or the like, whether to send the TAC corresponding to the second cell or the second correspondence to the IAB-MT, that is, step 802. Alternatively, the IAB-MT may determine, depending on whether the received TAC corresponding to the second cell is the same as the TAC corresponding to the second cell, whether the first correspondence is the same as the second correspondence, or the like, whether to send the tracking area information corresponding to the second cell, the second correspondence, or the like to the IAB-DU, that is, step 803.

In this application, the IAB-MT reports the information corresponding to the second cell, the current location information, or the like to the donor node. The donor node configures a corresponding TAC for the IAB-MT based on the information about the second cell, and the IAB-MT notifies the IAB-DU of the TAC. According to the solution in this application, the IAB-DU may obtain the TAC that is based on the current cell or location, to update the system message and broadcast the updated system message. This ensures a success rate of paging the UE in a coverage area of the IAB-DU.

### Embodiment 5

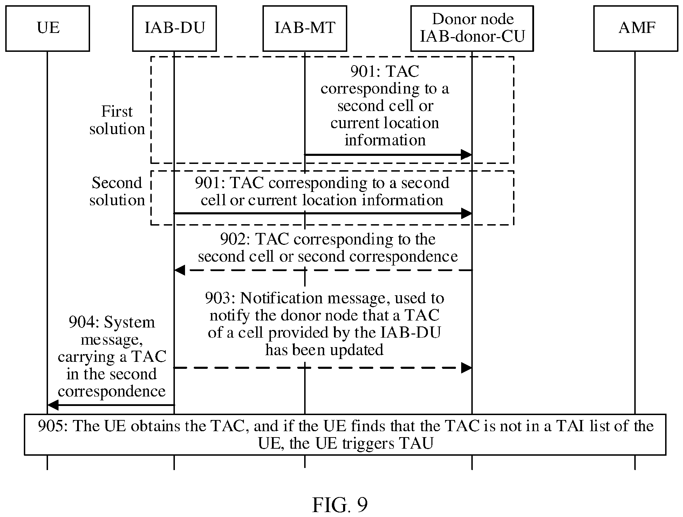

In Embodiment 5, an IAB-MT or an IAB-DU reports information about a second cell or current location information to a donor node, and the donor node notifies, via an F1AP message, the IAB-DU of a TAC corresponding to a current location. As shown in FIG. 9, a schematic flowchart is provided. At least the following steps are included.

Step 901: The IAB-MT or the IAB-DU reports a TAC corresponding to the second cell or the current location information to the donor node.

Optionally, the IAB-MT may send an RRC message to the donor node, where the RRC message carries the TAC corresponding to the second cell or the current location information. Alternatively, the IAB-DU may send the F1AP message to the donor node, where the F1AP message carries the TAC corresponding to the second cell or the current location information.

Step 902: The donor node sends the TAC corresponding to the second cell or indication information of a second correspondence to the IAB-DU.

Optionally, the donor node may determine whether a TAC corresponding to a first cell is the same as the TAC corresponding to the second cell, or determine whether a first correspondence is the same as the second correspondence. If the TAC corresponding to the first cell is different from the TAC corresponding to the second cell, or the first correspondence is different from the second correspondence, the donor node sends the TAC corresponding to the second cell or the indication information of the second correspondence to the IAB-DU. Alternatively, the donor node may directly send the TAC corresponding to the second cell or the indication information of the second correspondence to the IAB-DU without performing the foregoing determining process.

Step 903: The IAB-DU sends a notification message to the donor node, where the notification message is used to notify the donor node that the TAC of the cell provided by the IAB-DU has been updated. Step 903 is optional. In other words, the IAB-DU may not send the notification message to the donor node.

Step 904: The IAB-DU broadcasts a system message, where the system message includes the TAC that corresponds to the cell provided by the IAB-DU and that is in the second correspondence.

Step 905: A UE obtains the TAC based on the system message. Optionally, if finding that the TAC broadcast by the IAB-DU does not belong to a TAC list, the UE triggers a TAU process.

Embodiment 5 is similar to Embodiment 4, and differences are as follows. In Embodiment 4, the IAB-DU may report the information corresponding to the second cell or the second correspondence to the donor node via the F1AP message. In addition, the donor node directly notifies the IAB-DU of the TAC corresponding to the current location, the second correspondence, or the like via the F1AP message, and the TAC corresponding to the current location, the second correspondence, or the like is not forwarded by the IAB-MT.

In Embodiment 5, the IAB-MT or the IAB-DU reports the information about the second cell or the current location information to the donor node, and the donor node configures the TAC for the IAB-DU based on the information about the second cell, so that the IAB-DU may obtain the TAC based on the current accessed cell or the current location, to update a system message and broadcast the updated message. This ensures a success rate of paging the UE in a coverage area.

### Embodiment 6

In Embodiment 6, an example in which a first node is an IAB-DU and a second node is an IAB-MT is used. When the IAB-MT performs cell handover in a donor node, the donor node notifies the IAB-MT of a TAC of a target cell via RRC, and the IAB-MT notifies the IAB-DU to update a TAC and broadcast the updated TAC. In Embodiment 6, it may be considered that, a first cell and a second cell, namely, a source cell and a target cell, belong to a same donor node. In other words, cells provided by the donor node include the first cell and the second cell. It may be understood that, the first cell and the second node may be cells directly provided by the donor node, cells provided via a relay node, or the like. This is not limited.

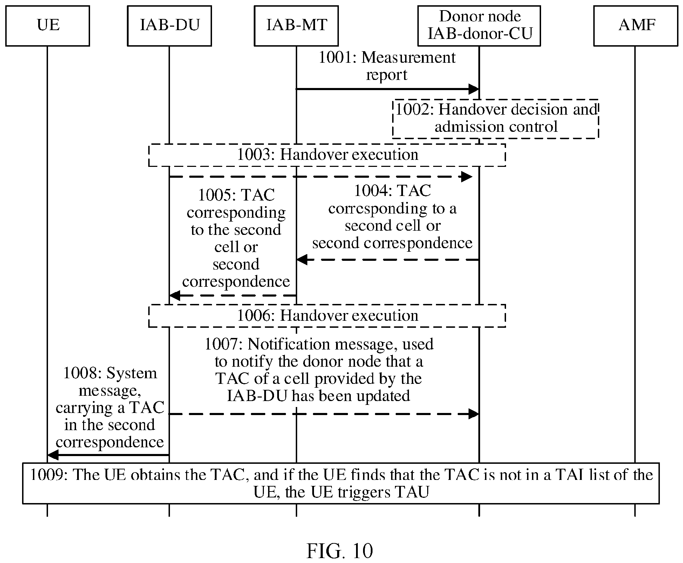

As shown in FIG. 10, a flowchart is provided. At least the following steps are included.

Step 1001: When detecting an A2 event, the IAB-MT reports a measurement report to the donor node. Optionally, the donor node may be a CU in the donor node, and may be referred to as an IAB-donor-CU.

Optionally, the A2 event may be that the IAB-MT detects that signal quality of a serving cell is lower than a specific threshold. The measurement report includes quality of service information of each cell detected by the IAB-MT.

Step 1002: The donor node performs handover decision and admission control, and determines that the IAB-MT needs to perform cell handover in the donor node. Step 1002 is optional.

Optionally, the handover decision and admission control mean that the donor node selects, based on the measurement report reported by the IAB-MT, a target cell whose quality of service meets a requirement, performs authentication, and determines that the IAB-MT may be handed over to the target cell. The target cell may be referred to as the second cell.

Step 1003: Perform cell handover, where the cell handover may also be referred to as cell migration.

For example, the IAB-DU and the IAB-MT perform handover from the source cell to the target cell, where the source cell may be referred to as the first cell, and the target cell may be referred to as the second cell. Optionally, the cell handover may not be performed in step 1003, and the cell handover is performed in subsequent step 1006.

Step 1004: The donor node sends a TAC corresponding to the second cell or indication information of a second correspondence to the IAB-MT.

Optionally, when the found TAC corresponding to the second cell is inconsistent with a TAC corresponding to the first cell, or a found TAC that corresponds to a cell provided by the IAB-DU and that is maintained by the donor node is inconsistent with the TAC in the second correspondence, the donor node sends a notification message to the IAB-MT, where the notification message may carry the TAC corresponding to the second cell, the indication information of the second correspondence, or the like. Alternatively, the donor node may directly notify the IAB-MT of the TAC corresponding to the second cell or the second correspondence without performing the foregoing determining.

Step 1005: The IAB-MT sends the TAC corresponding to the second cell or the indication information of the second correspondence to the IAB-DU.

For example, the IAB-MT determines whether the TAC corresponding to the second cell is consistent with the TAC corresponding to the first cell, or determines whether the second correspondence is consistent with a first correspondence. If the TAC corresponding to the second cell is inconsistent with the TAC corresponding to the first cell, or the second correspondence is inconsistent with the first correspondence, the IAB-MT sends the TAC corresponding to the second cell or the indication information of the second correspondence to the IAB-DU. Alternatively, the IAB-MT may directly send the TAC corresponding to the second cell, the indication information of the second correspondence, or the like to the IAB-DU without performing the foregoing determining process.

Step 1006: Perform the cell handover.

It should be noted that, if the cell handover is performed in step 1003, the cell handover is not performed in step 1006.

Step 1007: The IAB-DU sends the notification message to the donor node, where the notification message is used to notify the donor node that the TAC corresponding to the cell provided by the IAB-DU has been updated. Step 1007 is optional. In other words, the IAB-DU may not send the notification message to the donor node.

For example, the IAB-DU may determine whether the TAC in the second correspondence that is obtained by the IAB-DU is consistent with the currently broadcast TAC. If the TAC in the second correspondence that is obtained by the IAB-DU is inconsistent with the currently broadcast TAC, the IAB-DU sends an F1AP message to the donor node, where the F1AP message carries the TAC corresponding to the second cell or the second correspondence, to notify the donor node that the IAB-DU is to use a new TAC. Alternatively, the IAB-DU may directly send the notification message to the donor node without performing determining. Optionally, the IAB-DU may send an F1AP message to the donor, where the F1AP message carries the TAC corresponding to the second cell, the indication information of the second correspondence, or the like.

Step 1008: The IAB-DU broadcasts a system message, where the system message includes the TAC that corresponds to the cell provided by the IAB-DU and that is in the second correspondence.

Step 1009: A UE obtains the TAC based on the system message. Optionally, if finding that the TAC broadcast by the IAB-DU is not located in or does not belong to a TAC list, the UE triggers a TAU process.

In this application, because the TAC is cell-based, TAC information may change in the case of cell handover. Therefore, in Embodiment 6, a scenario in which the IAB-MT performs the cell handover in the donor node is considered. The donor node includes the TAC corresponding to the target cell, namely, the TAC corresponding to the second cell or the second correspondence via the RRC message (for example, a handover command). Then, the IAB-MT notifies the IAB-DU through an internal interface. A process of notifying the IAB-DU of the TAC corresponding to the second cell or the second correspondence may occur before the cell handover, for example, the cell handover occurs in step 1006, or may occur after the cell handover, for example, the cell handover occurs in step 1003.

In Embodiment 6, in a process in which the IAB-MT performs the cell handover in the donor node, the donor node notifies, via the RRC message, the IAB-MT of the TAC corresponding to the second cell. Then, the IAB-MT notifies the IAB-DU to update a system message and broadcast the updated system message. According to the solution in Embodiment 6, the IAB-DU may obtain the TAC that is based on the current accessed cell or a current location, to update the system message and broadcast the updated system message. This ensures a success rate of paging the UE in a coverage area of the IAB-DU.

### Embodiment 7

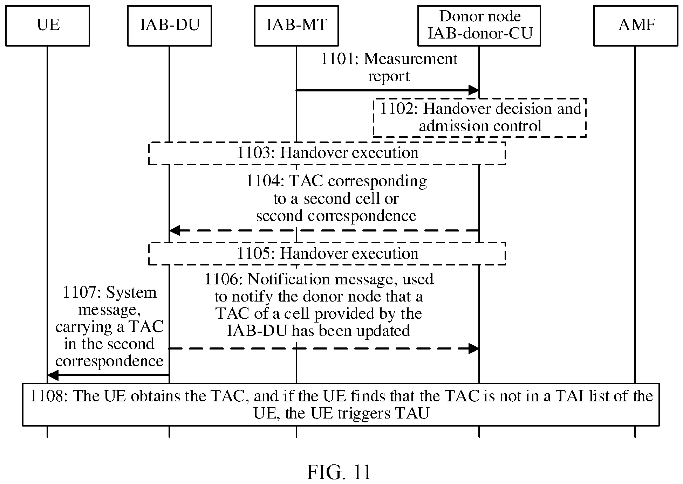

In Embodiment 7, an example in which a first node is an IAB-DU, a second node is a donor node, and the donor node may be a CU part in the donor node, and may be referred to as an IAB-donor-CU is used. A flowchart is provided. In the procedure, when an IAB-MT performs cell handover in a same donor node, the donor node notifies, via an F1AP message, the IAB-DU to update a system message and broadcast an updated system message. In Embodiment 7, it may be considered that, a first cell and a second cell, namely, a source cell and a target cell, belong to a same donor node. In other words, cells provided by the donor node include the first cell and the second cell. It may be understood that, the first cell and the second node may be cells directly provided by the donor node, cells provided via a relay node, or the like. This is not limited. As shown in FIG. 11, at least the following steps are included.

Step 1101: When detecting an A2 event, the IAB-MT reports a measurement report to the donor node.

Step 1102: The donor node performs handover decision and admission control, and determines that the IAB-MT needs to perform cell handover in the same donor node. Step 1102 is optional.

Step 1103: Perform cell handover.

For example, the IAB-DU and the IAB-MT perform handover from the source cell to the target cell, where the source cell may be referred to as the first cell, and the target cell may be referred to as the second cell. Optionally, the cell handover may not be performed in step 1103, and the cell handover is performed in subsequent step 1106.

Step 1104: The donor node sends a TAC corresponding to the second cell or indication information of a second correspondence to the IAB-DU.

Optionally, when the found TAC corresponding to the second cell is different from a TAC corresponding to the first cell, or a found TAC that corresponds to a cell provided by the IAB-DU and that is maintained by the donor node is different from the TAC in the second correspondence, the donor node sends a notification message to the IAB-DU, where the notification message may carry the TAC corresponding to the second cell, the indication information of the second correspondence, or the like. Alternatively, the donor node may also directly notify the IAB-DU of the TAC corresponding to the second cell or the second correspondence without performing the foregoing determining.

Step 1105: Perform the cell handover.

It should be noted that, if the cell handover is performed in step 1103, the cell handover is not performed in step 1105.

Step 1106: The IAB-DU sends the notification message to the donor node, where the notification message is used to notify the donor node that the TAC corresponding to the cell provided by the IAB-DU has been updated. Step 1106 is optional. In other words, the IAB-DU may not send the notification message to the donor node.

For example, the IAB-DU may determine whether the TAC in the second correspondence that is obtained by the IAB-DU is consistent with a currently broadcast TAC. If the TAC in the second correspondence that is obtained by the IAB-DU is inconsistent with the currently broadcast TAC, the IAB-DU sends an F1AP message to the donor node, where the F1AP message carries the TAC corresponding to the second cell or the second correspondence, to notify the donor node that the IAB-DU is to use a new TAC. Alternatively, the IAB-DU may directly send the notification message to the donor node without performing determining.

Step 1107: The IAB-DU broadcasts a system message, where the system message includes the TAC that corresponds to the cell provided by the IAB-DU and that is in the second correspondence.

Step 1108: A UE obtains the TAC based on the system message. Optionally, if finding that the TAC broadcast by the IAB-DU is not located in or does not belong to a TAC list, the UE triggers a TAU process.

Embodiment 7 is similar to Embodiment 6, and differences are as follows. In Embodiment 7, the donor node directly notifies the IAB-DU of the TAC corresponding to the second cell or the second correspondence via the F1AP message, and the TAC corresponding to the second cell or the second correspondence is not forwarded by the IAB-MT.

### Embodiment 8

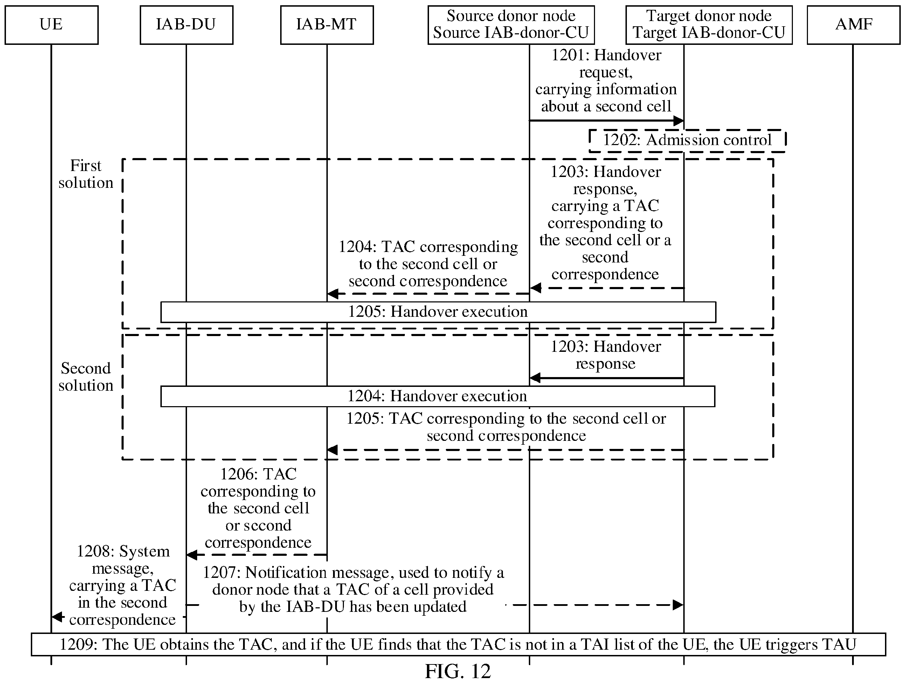

In Embodiment 8, an example in which a first node is an IAB-DU, and a second node is an IAB-MT is used. In Embodiment 8, the IAB-MT is handed over from a source cell to a target cell. The source cell is referred to as a first cell, and the target cell is referred to as a second cell. The source cell and the target cell belong to different donor nodes, and the two donor nodes are respectively referred to as a source donor node and a target donor node. The source donor node or the target donor node may notify the IAB-MT of a TAC corresponding to a second cell or a second correspondence via an RRC message, the IAB-MT notifies the IAB-DU of the TAC corresponding to the second cell or the second correspondence, and the IAB-DU updates a system message and broadcast the updated system message. In Embodiment 8 to Embodiment 11, the first cell belongs to the source donor node. In other words, a cell provided by the source donor node includes the first cell. The first cell may be a cell directly provided by the source donor node or a cell provided via a relay node. The second cell belongs to the target donor node. In other words, a node provided by the target donor includes the second cell. The second cell may be a cell directly provided by the target donor, a cell provided via the relay node, or the like. This is not limited. As shown in FIG. 12, a flowchart is provided. The procedure includes at least the following steps.

Step 1201: The source donor node sends a handover request (handover request) to the target donor node, where the handover request carries information about the target cell, namely, information about the second cell.

Optionally, the source donor node may determine the target cell based on a measurement report reported by the IAB-MT. When the target cell belongs to another donor node, the another donor node may be referred to as the target donor node, and the handover request is sent to the target donor node. Optionally, the handover request may further include a TAC corresponding to the target cell, namely, the TAC corresponding to the second cell, indication information of the second correspondence, or the like. The target donor node may determine, based on the TAC corresponding to the second cell or the second correspondence, whether a TAC needs to be updated. It should be noted that, in a case in which the target donor node does not need to determine whether the TAC needs to be updated, the handover request may not carry the TAC corresponding to the second cell, the indication information of the second correspondence, or the like.

Step 1202: The target donor node performs admission control when receiving the handover request. Step 1202 is optional.

Optionally, a process of the admission control may include: The target donor node performs authentication, and determines that the IAB-MT is handed over to the target cell under the target donor. Optionally, the source donor node may be a CU node in the source donor, and is referred to as a source donor-CU. The target donor node may be a CU node in the target donor, and is referred to as a target donor-CU.

In a first solution:
Step 1203: The target donor node sends a handover response (handover response) to the source donor node, where the handover response carries the TAC corresponding to the second cell or the indication information of the second correspondence.

Optionally, the target donor node determines whether the TAC corresponding to the second cell is consistent with a TAC corresponding to the first cell received in step 1201, or determines whether the second correspondence is consistent with a first correspondence received in step 1201. If the TAC corresponding to the second cell is inconsistent with the TAC corresponding to the first cell received in step 1201, or the second correspondence is inconsistent with the first correspondence received in step 1201, the target donor node includes the TAC corresponding to the second cell or the indication information of the second correspondence in the handover response. Alternatively, the target donor node may directly include the TAC corresponding to the second cell, the indication information of the second correspondence, or the like in the handover response without performing the foregoing determining.

Step 1204: The source donor node sends the TAC corresponding to the second cell or the indication information of the second correspondence to the IAB-MT.

For example, the source donor node may send an RRC reconfiguration message to the IAB-MT, where the RRC reconfiguration message carries the TAC corresponding to the second cell, the indication information of the second correspondence, or the like. Optionally, the source donor node may determine whether the received TAC corresponding to the second cell is consistent with the TAC corresponding to the first cell, or whether the second correspondence is consistent with the first correspondence. If the received TAC corresponding to the second cell is inconsistent with the TAC corresponding to the first cell, or the second correspondence is inconsistent with the first correspondence, the RRC reconfiguration message sent by the source donor node to the IAB-MT carries the TAC corresponding to the second cell or the indication information of the second correspondence. If the received TAC corresponding to the second cell is consistent with the TAC corresponding to the first cell, or the second correspondence is consistent with the first correspondence, the RRC reconfiguration message does not carry the TAC corresponding to the second cell or the indication information of the second correspondence. Alternatively, the source donor node may directly include the TAC corresponding to the second cell, the indication information of the second correspondence, or the like in the RRC reconfiguration message without performing the foregoing determining.

Step 1205: Perform cell handover.

In a second solution:
Step 1203: The target donor node sends a handover response to the source donor node.

Step 1204: Perform cell handover.

Step 1205: The target donor node sends the TAC corresponding to the second cell or the indication information of the second correspondence to the IAB-MT.

For example, the target donor node sends an RRC reconfiguration message to the IAB-MT, where the RRC reconfiguration message carries the TAC corresponding to the second cell or the indication information of the second correspondence. Optionally, the target donor node may determine whether the found TAC corresponding to the second cell is consistent with a TAC corresponding to the first cell received in step 1201; or the target donor node determines whether the determined second correspondence is consistent with a first correspondence received in step 1201. If the found TAC corresponding to the second cell is inconsistent with the TAC corresponding to the first cell received in step 1201, or the determined second correspondence is inconsistent with the first correspondence received in step 1201, the target donor node includes the TAC corresponding to the second cell or the indication information of the second correspondence in the RRC reconfiguration message. If the found TAC corresponding to the second cell is consistent with the TAC corresponding to the first cell received in step 1201, or the determined second correspondence is consistent with the first correspondence received in step 1201, the target donor node does not include the TAC corresponding to the second cell, the indication information of the second correspondence, or the like in the RRC reconfiguration message. Alternatively, the target donor node may directly include the TAC corresponding to the second cell, the indication information of the second correspondence, or the like in the RRC reconfiguration message without performing the foregoing determining process.

Step 1206: The IAB-MT sends the TAC corresponding to the second cell or the indication information of the second correspondence to the IAB-DU.

For example, the IAB-MT may send, through an internal interface, the TAC corresponding to the second cell or the indication information of the second correspondence to the IAB-DU bound to the IAB-MT. The IAB-MT determines whether the TAC corresponding to the first cell is consistent with the TAC corresponding to the second cell, or determines whether the first correspondence is consistent with the second correspondence. If the TAC corresponding to the first cell is inconsistent with the TAC corresponding to the second cell, or the first correspondence is inconsistent with the second correspondence, the IAB-MT sends the TAC corresponding to the second cell or the indication information of the second correspondence to the IAB-DU. If the TAC corresponding to the first cell is consistent with the TAC corresponding to the second cell, or the first correspondence is consistent with the second correspondence, the IAB-MT does not send the TAC corresponding to the second cell, the indication information of the second correspondence, or the like to the IAB-DU. Alternatively, the IAB-MT may directly send the TAC corresponding to the second cell, the indication information of the second correspondence, or the like to the IAB-DU without performing the foregoing determining.

Step 1207: The IAB-DU sends a notification message to the target donor, where the notification message is used to notify that TAC information of a cell provided by the IAB-DU has been updated. Step 1207 is optional. In other words, the IAB-DU may not send the notification message to the donor node.

Optionally, the IAB-DU may determine whether the TAC corresponding to the first cell is consistent with the TAC corresponding to the second cell, or determine whether the TAC in the first correspondence is consistent with the TAC in the second correspondence. If the TAC corresponding to the first cell is inconsistent with the TAC corresponding to the second cell, or the TAC in the first correspondence is inconsistent with the TAC in the second correspondence, the IAB-DU sends an F1AP message to the target donor, where the F1AP message carries the TAC corresponding to the second cell or the indication information of the second correspondence. If the TAC corresponding to the first cell is consistent with the TAC corresponding to the second cell, or the TAC in the first correspondence is consistent with the TAC in the second correspondence, the IAB-DU does not send an F1AP message to the target donor. Alternatively, the IAB-DU may directly notify the target donor node of the TAC corresponding to the second cell, the indication information of the second correspondence, or the like without performing the foregoing determining.

Step 1208: The IAB-DU broadcasts a system message, where the system message includes the TAC that corresponds to the cell provided by the IAB-DU and that is in the second correspondence.

Step 1209: A UE obtains the TAC based on the system message. Optionally, if finding that the TAC broadcast by the IAB-DU is not located in or does not belong to a TAC list, the UE triggers a TAU process.

In Embodiment 8, a scenario in which when the IAB-MT performs cell handover, the cell before the handover and the cell after the handover belong to different donor nodes is considered. The source donor node may exchange with the target donor node. Before the cell handover, the source donor node includes, in the RRC reconfiguration message, the TAC corresponding to the second cell or the second correspondence. Alternatively, after the cell handover, the target donor node directly includes the TAC corresponding to the second cell or the second correspondence in the RRC reconfiguration message. After receiving the TAC corresponding to the second cell or the second correspondence, the IAB-MT notifies the IAB-DU through the internal interface, so that the IAB-DU updates the system message and broadcasts the updated system message. This ensures a success rate of paging the UE in a coverage area of the IAB-DU.

### Embodiment 9

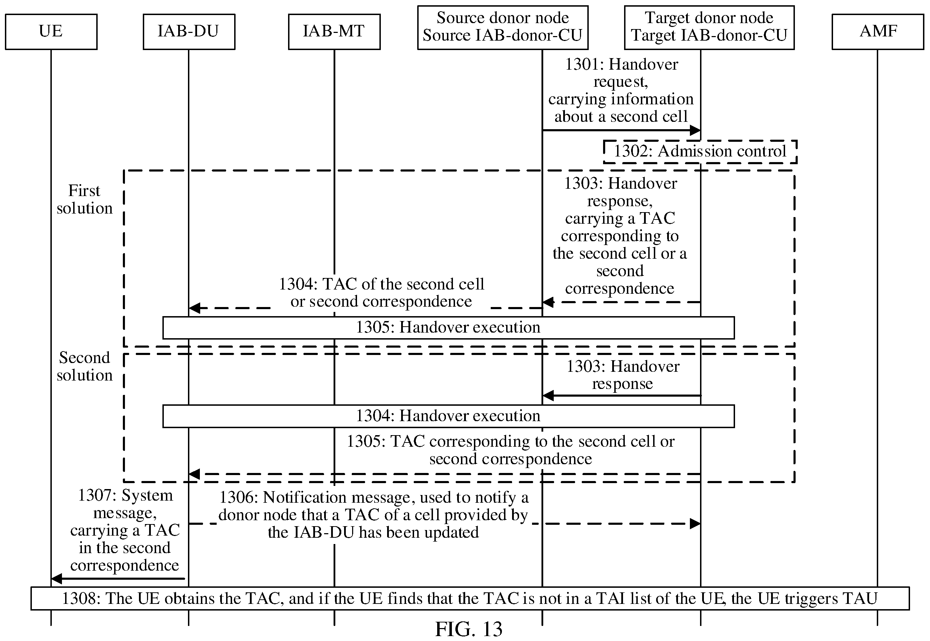

In Embodiment 9, an example in which a first node is an IAB-DU, and a second node is a source donor node or a target donor node is used. Differences between Embodiment 9 and Embodiment 8 are as follows. The source donor node or the target donor node notifies the IAB-DU of a TAC corresponding to a second cell or indication information of a second correspondence via an F1AP message. As shown in FIG. 13, a flowchart is provided. At least the following steps are included.

Step 1301: The source donor node sends a handover request to the target donor node, where the handover request carries information about a target cell, namely, information about the second cell.

Optionally, the handover request may further carry a TAC corresponding to a first cell, indication information of a first correspondence, or the like.

Step 1302: The target donor node performs admission control. Step 1302 is optional.

In a first solution:
Step 1303: The target donor node sends a handover response to the source donor node, where the handover response carries a TAC corresponding to the target cell, namely, the TAC corresponding to the second cell or the indication information of the second correspondence.

Step 1304: The source donor node sends the TAC corresponding to the second cell or the indication information of the second correspondence to the IAB-DU.

For example, the source donor node sends an F1AP message to the IAB-DU, where the F1AP message carries the TAC corresponding to the second cell, the indication information of the second correspondence, or the like. Optionally, the source donor node may determine whether the TAC corresponding to the second cell is the same as the TAC corresponding to the first cell, or determine whether the second correspondence is the same as the first correspondence. If the TAC corresponding to the second cell is different from the TAC corresponding to the first cell, or the second correspondence is different from the first correspondence, the source donor node sends the F1AP message to the IAB-DU, where the F1AP message carries the TAC corresponding to the second cell or the indication information of the second correspondence. If the TAC corresponding to the second cell is the same as the TAC corresponding to the first cell, or the second correspondence is the same as the first correspondence, the source donor node does not send the F1AP message to the IAB-DU. Alternatively, the source donor node may directly send the F1AP message or the like that carries the TAC corresponding to the second cell or the indication information of the second correspondence to the IAB-DU without performing the foregoing determining.

Step 1305: Perform a cell migration process. The cell migration may also be referred to as cell handover.

In a second solution:
Step 1303: The target donor node sends a handover response to the source donor node.

Step 1304: Perform a cell migration process.

Step 1305: The target donor node sends the TAC corresponding to the second cell or the indication information of the second correspondence to the IAB-DU.

For example, the target donor node sends an F1AP message to the IAB-DU, where the F1AP message carries the TAC corresponding to the second cell, the indication information of the second correspondence, or the like. Optionally, the target donor node may determine whether the TAC corresponding to the second cell is the same as the TAC corresponding to the first cell, or determine whether the second correspondence is the same as the first correspondence. If the TAC corresponding to the second cell is different from the TAC corresponding to the first cell, or the second correspondence is different from the first correspondence, the target donor node sends the F1AP message to the IAB-DU, where the F1AP message carries the TAC corresponding to the second cell or the indication information of the second correspondence. If the TAC corresponding to the second cell is the same as the TAC corresponding to the first cell, or the second correspondence is the same as the first correspondence, the target donor node does not send the F1AP message to the IAB-DU. Alternatively, the target donor node may directly send the F1AP message or the like that carries the TAC corresponding to the second cell or the indication information of the second correspondence to the IAB-DU without performing the foregoing determining.

Step 1306: The IAB-DU sends a notification message to the target donor node, where the notification message may be used to notify the target donor node that a TAC of a cell provided by the IAB-DU is updated. The notification message may be an F1AP message. Step 1306 is optional. In other words, the IAB-DU may not send the notification message to the donor node.

Step 1307: The IAB-DU broadcasts a system message, where the system message includes the TAC that corresponds to the cell provided by the IAB-DU and that is in the second correspondence.

Step 1308: A UE obtains the TAC based on the system message. Optionally, if finding that the TAC broadcast by the IAB-DU is not located in or does not belong to a TAC list, the UE triggers a TAU process.

Embodiment 9 is similar to Embodiment 8, and differences are as follows. In Embodiment 9, the source donor node or the target donor node directly notifies the IAB-DU of the TAC corresponding to the second cell or the second correspondence via the F1AP message, and the TAC corresponding to the second cell or the second correspondence does not need to be forwarded by the IAB-MT.

### Embodiment 10

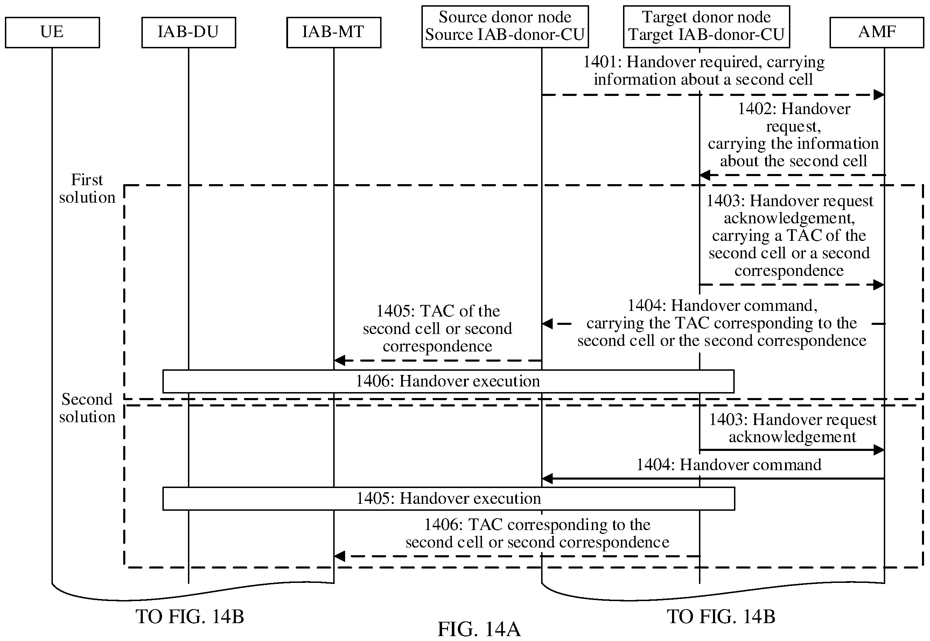

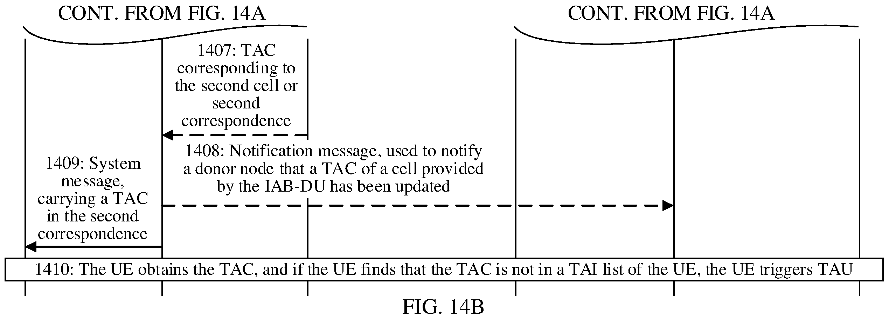

In Embodiment 10, an example in which a first node is an IAB-DU, and a second node is a source donor node or a target donor node is used. In Embodiment 10, when an IAB-MT performs cell handover, a source cell belongs to the source donor node, and a target cell belongs to the target donor node. The source cell may be referred to as a first cell, and the target cell may be referred to as a second cell. The source donor node or the target donor node notifies the IAB-MT of a TAC corresponding to the second cell or indication information of a second correspondence via an RRC message. Then, the IAB-MT notifies the IAB-DU to update a system message and broadcast an updated system message. A main difference between cell handover in Embodiment 10 and the cell handover in the foregoing embodiment is as follows. Information is not directly exchanged between the source donor node and the target donor node, but is forwarded via an access and mobility management function (access and mobility management function, AMF). As shown in FIG. 14A and FIG. 14B, a flowchart is provided. At least the following steps are included.

Step 1401: The source donor node sends a handover required (handover required) to message the AMF, where the handover required message carries information about the target cell, namely, information about the second cell.

Optionally, the handover required message may further carry a TAC corresponding to a first cell or indication information of a first correspondence. In this application, if the AMF or the target donor node determines whether a process of updating the TAC is needed, the handover required message in step 1401 may carry the TAC corresponding to the first cell or the indication information of the first correspondence. If the AMF or the target donor node does not determine whether a process of updating the TAC is needed, the handover required message in step 1401 may not carry the TAC corresponding to the first cell or the indication information of the first correspondence.

Step 1402: The AMF sends a handover request (handover request) to the target donor node.

In this application, the AMF may determine the target donor node based on the information about the target cell carried in the handover required message, and send the handover request to the target donor node. Optionally, the target donor node may determine whether a cell provided by the IAB-DU needs to be updated. In this case, the handover request in step 1402 may carry the TAC corresponding to the first cell, the indication information of the first correspondence, or the like.

In a first solution:
Step 1403: The target donor node sends a handover request acknowledgment (handover request acknowledgement) to the AMF.

Optionally, the handover request acknowledgment may carry the TAC corresponding to the second cell or the indication information of the second correspondence. For example, when receiving the handover request sent by the AMF, the target donor node may perform admission control, and determine whether the TAC of the cell provided by the IAB-DU needs to be updated. For example, the target donor node may determine whether the TAC corresponding to the second cell is consistent with the TAC corresponding to the first cell received in step 1402, or determine whether the second correspondence is consistent with the first correspondence received in step 1402. If the TAC corresponding to the second cell is inconsistent with the TAC corresponding to the first cell received in step 1402, or the second correspondence is inconsistent with the first correspondence received in step 1402, the target donor node determines that the TAC of the cell provided by the IAB-DU needs to be updated, and needs to notify the IAB-DU of the TAC corresponding to the second cell or the second correspondence. In this case, the handover request acknowledgment in step 1403 may carry the TAC corresponding to the second cell or the indication information of the second correspondence. Alternatively, if the AMF does not perform the process of determining whether the TAC of the cell provided by the IAB-DU needs to be updated, the handover request acknowledgment in step 1403 may directly carry the TAC corresponding to the second cell, the indication information of the second correspondence, or the like.

Step 1404: The AMF sends a handover command (handover command) to the source donor node.

Optionally, the handover command carries the TAC corresponding to the second cell or the indication information of the second correspondence. For example, the AMF may determine whether the TAC of the cell provided by the IAB-DU needs to be updated. For example, the AMF may compare whether the TAC corresponding to the second cell received in step 1403 is the same as the TAC corresponding to the first cell in step 1401; or the AMF compares whether the second correspondence received in step 1403 is the same as the first correspondence in step 1401. If the TAC corresponding to the second cell received in step 1403 is different from the TAC corresponding to the first cell in step 1401, or the second correspondence received in step 1403 is different from the first correspondence in step 1401, it indicates that the TAC of the cell provided by the IAB-DU needs to be updated, and the handover command in step 1404 may carry the TAC corresponding to the second cell or the indication information of the second correspondence. If the TAC corresponding to the second cell received in step 1403 is the same as the TAC corresponding to the first cell in step 1401, or the second correspondence received in step 1403 is the same as the first correspondence in step 1401, it indicates that the cell provided by the IAB-DU does not need to be updated, and the handover command in step 1404 does not carry the TAC corresponding to the second cell or the indication information of the second correspondence. Alternatively, the AMF may directly include the TAC corresponding to the second cell, the indication information of the second correspondence, or the like in the handover command without performing the foregoing determining.

Step 1405: The source donor node sends an RRC reconfiguration message to the IAB-MT.

Optionally, the RRC reconfiguration message may carry the TAC corresponding to the second cell or the indication information of the second correspondence. For example, the source donor node determines whether the TAC corresponding to the first cell is the same as the TAC corresponding to the second cell, or determines whether the first correspondence is the same as the second correspondence. If the TAC corresponding to the first cell is different from the TAC corresponding to the second cell, or the first correspondence is different from the second correspondence, the source donor node may include the TAC corresponding to the second cell or the indication information of the second correspondence in the RRC reconfiguration message. If the TAC corresponding to the first cell is the same as the TAC corresponding to the second cell, or the first correspondence is the same as the second correspondence, the source donor node does not include the TAC corresponding to the second cell, the indication information of the second correspondence, or the like in the RRC reconfiguration message. Alternatively, in this application, the source donor node may directly include the indication information of the second cell, the indication information of the second correspondence, or the like in the RRC reconfiguration message without performing the foregoing determining.

Step 1406: Perform a migration process from the first cell to the second cell.

In a second solution:
Step 1403: The target donor node sends a handover request acknowledgment (handover request acknowledgement) to the AMF.

Step 1404: The AMF sends a handover command (handover command) message to the source donor node.

Step 1405: Perform a migration process from the first cell to the second cell.

Step 1406: The target donor node sends an RRC reconfiguration message to the IAB-MT.

Optionally, the RRC reconfiguration message may carry the TAC corresponding to the second cell or the indication information of the second correspondence. For example, the target donor node may determine whether the TAC corresponding to the second cell is the same as the TAC corresponding to the first cell, or determine whether the second correspondence is the same as the first correspondence. If the TAC corresponding to the second cell is different from the TAC corresponding to the first cell, or the second correspondence is different from the first correspondence, the RRC reconfiguration message carries the TAC corresponding to the second cell or the indication information of the second correspondence. If the TAC corresponding to the second cell is the same as the TAC corresponding to the first cell, or the second correspondence is the same as the first correspondence, the RRC reconfiguration message does not carry the foregoing content. Alternatively, the target donor node may directly include the TAC corresponding to the second cell or the indication information of the second correspondence in the RRC reconfiguration message without performing the foregoing determining.

Step 1407: The IAB-MT sends the TAC corresponding to the second cell or the indication information of the second correspondence to the IAB-DU.

For example, the IAB-MT may determine whether the TAC corresponding to the second cell is the same as the TAC corresponding to the first cell, or determine whether the second correspondence is the same as the first correspondence. If the TAC corresponding to the second cell is different from the TAC corresponding to the first cell, or the second correspondence is different from the first correspondence, the IAB-MT notifies the IAB-DU bound to the IAB-MT of the TAC corresponding to the second cell or the indication information of the second correspondence through an internal interface. If the TAC corresponding to the second cell is the same as the TAC corresponding to the first cell, or the second correspondence is the same as the first correspondence, the IAB-MT does not notify the IAB-DU.

Step 1408: The IAB-DU sends a notification message to the target donor, where the notification message is used to notify the target donor node that the TAC of the cell provided by the IAB-DU has been updated. Step 1408 is optional. In other words, the IAB-DU may not send the notification message to the donor node.

Optionally, the notification message may be an F 1AP message or the like. For example, the IAB-DU may determine whether the TAC in the second correspondence is the same as the TAC currently broadcast by the IAB-DU; and if the TAC in the second correspondence is the same as the TAC currently broadcast by the IAB-DU, the IAB-DU sends the F 1AP message to the target donor node, to notify the target donor node that the IAB-DU is to use a new TAC.

Step 1409: The IAB-DU broadcasts a system message, where the system message includes the TAC that corresponds to the cell provided by the IAB-DU and that is in the second correspondence.

Step 1410: A UE obtains the TAC based on the system message. Optionally, if finding that the TAC broadcast by the IAB-DU is not located in or does not belong to a TAC list, the UE triggers a TAU process.

In Embodiment 10, when it is considered that the IAB-MT is handed over from the first cell to the second cell, and the first cell and the second cell belong to different donor nodes the source donor node may send the RRC reconfiguration message to the IAB-MT before the handover, where the RRC reconfiguration message carries the TAC corresponding to the second cell or the indication information of the second correspondence. Alternatively, the target donor node sends the RRC reconfiguration message to the IAB-MT after the handover, where the RRC reconfiguration message carries the TAC corresponding to the second cell or the indication information of the second correspondence. When receiving the TAC corresponding to the second cell or the second correspondence, the IAB-MT notifies the IAB-DU through the internal interface, so that the IAB-DU updates the system message and broadcasts the updated system message. This ensures a success rate of paging the UE in a coverage area of the IAB-DU.

### Embodiment 11

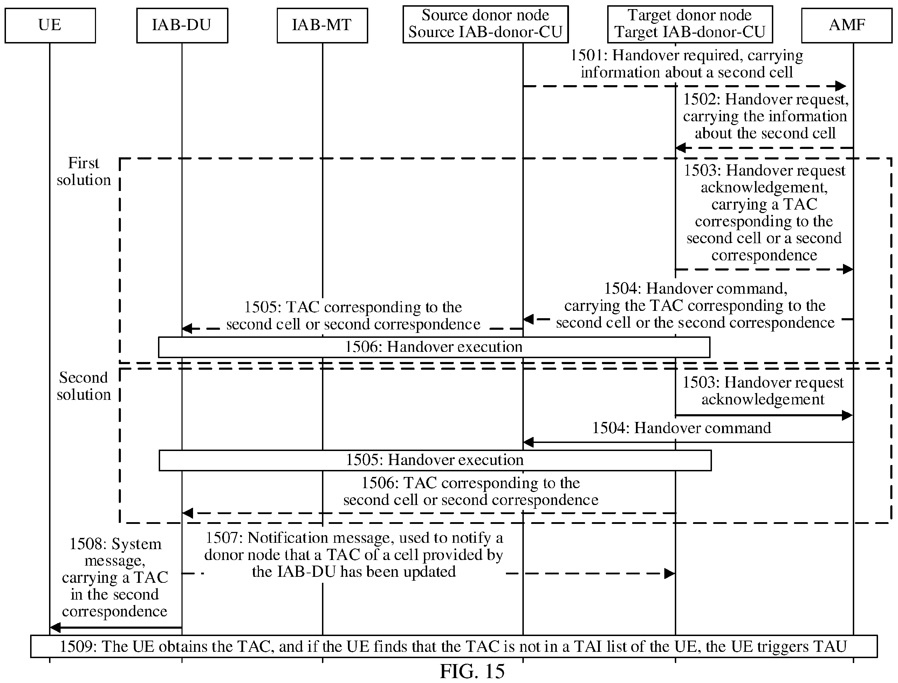

In Embodiment 11, an example in which a first node is an IAB-DU, and a second node is a source donor node or a target donor node is used. In Embodiment 11, when an IAB-MT is handed over from a source cell to a target cell, the source donor node or the target donor node notifies the IAB-DU of a TAC corresponding to a second cell or indication information of a second correspondence via an F1AP message. As shown in FIG. 15, a flowchart is provided. At least the following steps are included.

Step 1501: The source donor node sends a handover required (handover required) message to an AMF, where the handover required message carries information about the target cell, namely, information about the second cell.

Optionally, the handover required message may further carry a TAC corresponding to a first cell or indication information of a first correspondence.

Step 1502: The AMF sends a handover request (handover request) to the target donor node, where the handover request carries the information about the second cell.

Optionally, the handover request may carry the TAC corresponding to the first cell or the indication information of the first correspondence.

In a first solution:
Step 1503: The target donor node sends a handover request acknowledgment (handover request acknowledgment) to the AMF.

Optionally, the handover request acknowledgment may carry the TAC corresponding to the second cell or the indication information of the second correspondence.

Step 1504: The AMF sends a handover command (handover command) to the source donor node.

Optionally, the handover command carries the TAC corresponding to the second cell or the indication information of the second correspondence.

For a specific process of step 1501 to step 1504, refer to descriptions in step 1401 to step 1404 in FIG. 14A and FIG. 14B.

Step 1505: The source donor node sends the F1AP message to the IAB-DU.

Optionally, the F1AP message carries the TAC corresponding to the second cell or the indication information of the second correspondence. For example, the source donor node may determine whether the TAC corresponding to the first cell is the same as the TAC corresponding to the second cell, or determine whether the first correspondence is the same as the second correspondence. If the TAC corresponding to the first cell is different from the TAC corresponding to the second cell, or the first correspondence is different from the second correspondence, the source donor node includes the TAC corresponding to the second cell or the indication information of the second correspondence in the F1AP message. If the TAC corresponding to the first cell is the same as the TAC corresponding to the second cell, or the first correspondence is the same as the second correspondence, the source donor node does not include the foregoing content in the F1AP message. Alternatively, the source donor node may directly include the foregoing content or the like in the F1AP message without performing the foregoing determining. This is not limited.

Step 1506: Perform cell handover from the first cell to the second cell.

In a second solution:
Step 1503: The target donor node sends a handover request acknowledgment (handover request acknowledgment) to the AMF.

Step 1504: The AMF sends a handover command (handover command) to the source donor node.

Step 1505: Perform a migration process from the first cell to the second cell.

Step 1506: The target donor node sends the F1AP message to the IAB-DU.

Optionally, the F1AP message carries the TAC corresponding to the second cell or the indication information of the second correspondence. For example, the target donor node may determine whether the TAC corresponding to the first cell is the same as the TAC corresponding to the second cell, or determine whether the first correspondence is the same as the second correspondence. If the TAC corresponding to the first cell is different from the TAC corresponding to the second cell, or the first correspondence is different from the second correspondence, the target donor node includes the TAC corresponding to the second cell or the indication information of the second correspondence in the F1AP message. If the TAC corresponding to the first cell is the same as the TAC corresponding to the second cell, or the first correspondence is the same as the second correspondence, the target donor node does not include the foregoing content in the F1AP message. Alternatively, the target donor node may directly include the foregoing content or the like in the F1AP message without performing the foregoing determining. This is not limited.

Step 1507: The IAB-DU sends a notification message to the target donor, where the notification message is used to notify the target donor node that the TAC of the cell provided by the IAB-DU has been updated. For a specific process of step 1507, refer to the descriptions of step 1408 in FIG. 14A and FIG. 14B. Step 1507 is optional. In other words, the IAB-DU may not send the notification message to the donor node.

Step 1508: The IAB-DU broadcasts a system message, where the system message includes the TAC that corresponds to the cell provided by the IAB-DU and that is in the second correspondence.

Step 1509: A UE obtains the TAC based on the system message. Optionally, if finding that the TAC broadcast by the IAB-DU is not located in or does not belong to a TAC list, the UE triggers a TAU process.

Embodiment 11 is similar to Embodiment 10, and differences are as follows. In Embodiment 11, the source donor node or the target donor node directly notifies the IAB-DU of the TAC corresponding to the second cell or the indication information of the second correspondence via the F1AP message, and the TAC corresponding to the second cell or the indication information of the second correspondence is not forwarded by the IAB-MT.

### Embodiment 12

Embodiment 12 provides a communication method. The method includes: An AMF determines a TAI list based on a movement route. Optionally, the movement route may be a fixed movement route of a public transport vehicle such as a high-speed railway, a subway, or a public railway. For example, the AMF determines a base station that covers the fixed movement route, and determines the TAI list or the like based on a TAC of a corresponding cell in the base station. For example, cells serving on the fixed movement route include a cell 1, a cell 2, and a cell 3. When a TAC of a cell provided by an IAB-DU is the same as a TAC of an accessed cell, a TAI list configured for a UE includes a TAC 1, a TAC 2, and a TAC 3, where the TAC 1 to the TAC 3 are TACs respectively corresponding to the cell 1 to the cell 3. The AMF sends configuration information to the UE, where the configuration information is used to configure the TAI list determined based on the movement route.

In this embodiment, the UE may be located on the public transportation vehicle corresponding to the fixed movement route. An IAB-node is deployed in the public transportation vehicle, and a case in which a TAC broadcast by an IAB-DU in the IAB-node is the same as a TAC of a cell accessed by the IAB-node is set. In this case, during running of the public transportation vehicle, each TAC broadcast by the IAB-DU is the TAC of the accessed cell, and is located in the TAI list of the UE. This may avoid a case that the UE frequently triggers a TAU process.

It may be understood that, Embodiment 12 may be applied independently, or may be applied with reference to Embodiment 1 to Embodiment 11. This is not limited.

It should be noted that, in the flowcharts in FIG. 4 to FIG. 15 in this application, "dashed lines" are used to represent optional. Some steps may not be specifically described in the text description of the embodiments. However, it may be learned from the diagrams in FIG. 4 to FIG. 15 that, steps represented by dashed lines are optional and are not necessarily performed.

It may be understood that, to implement the functions in the foregoing methods, the first node and the second node include corresponding hardware structures and/or software modules for performing the functions. A person skilled in the art should be easily aware that, with reference to units and method steps in the examples described in this application, this application can be implemented by hardware or a combination of hardware and computer software. Whether a function is performed by hardware or hardware driven by computer software depends on particular application scenarios and design constraints of the technical solutions.

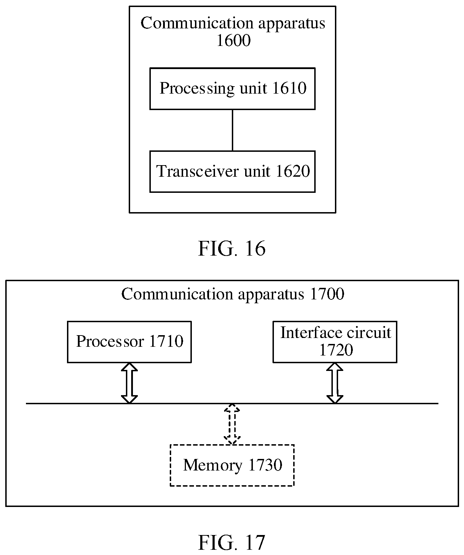

FIG. 16 and FIG. 17 are diagrams of structures of possible apparatuses according to this application. These communication apparatuses may be configured to implement functions of the first node or the second node in the foregoing methods, and therefore can also implement the beneficial effects of the foregoing methods.

As shown in FIG. 16, the communication apparatus 1600 includes a processing unit 1610 and a transceiver unit 1620. The communication apparatus 1600 is configured to implement the functions of the first node or the second node in the foregoing method embodiments.

When the communication apparatus 1600 is configured to implement the function of the first node in the foregoing method, the transceiver unit 1620 is configured to: when a first node is located in a first cell, obtain a first correspondence between a cell provided by the first node and tracking area information, where the first correspondence is related to tracking area information corresponding to the first cell; and when the first node migrates from the first cell to a second cell, obtain a second correspondence between the cell provided by the first node and tracking area information, where the second correspondence is related to tracking area information corresponding to the second cell. Optionally, the transceiver unit 1620 may be configured to receive a first message from a second node, where the first message includes indication information of the second correspondence, or the tracking area information corresponding to the second cell.

When the communication apparatus 1600 is configured to implement the function of the second node in the foregoing method embodiments, the processing unit 1610 is configured to obtain a second correspondence between a cell provided by a first node and tracking area information, where the second correspondence is related to tracking area information corresponding to a second cell; and the transceiver unit 1620 is configured to send a first message to the first node, where the first message includes indication information of the second correspondence.

For more detailed descriptions about the processing unit 1610 and the transceiver unit 1620, directly refer to related descriptions in the foregoing method embodiments. Details are not described herein again.

As shown in FIG. 17, a communication apparatus 1700 includes a processor 1710 and an interface circuit 1720. The processor 1710 and the interface circuit 1720 are coupled to each other. It may be understood that, the interface circuit 1720 may be a transceiver an input/output interface, a pin, or the like. Optionally, the communication apparatus 1700 may further include a memory 1730, configured to: store instructions to be executed by the processor 1710, store input data required for running instructions by the processor 1710, or store data generated after the processor 1710 runs instructions.

When the communication apparatus 1700 is configured to implement the foregoing method, the processor 1710 is configured to implement functions of the processing unit 1610, and the interface circuit 1720 is configured to implement functions of the transceiver unit 1620.

When the communication apparatus is a module applied to a first node, the first node module implements functions of the first node in the foregoing method. The first node module receives information from another module (for example, a radio frequency module or an antenna) in the first node, where the information is sent by a second node to the first node; or the first node module sends information to another module (for example, a radio frequency module or an antenna) in the first node, where the information is sent by the first node to a second node. The first node module herein may be a baseband chip of the first node, or may be a DU or another module. The DU herein may be a DU in an open radio access network (open radio access network, O-RAN) architecture.

When the communication apparatus is a module used in a second node, the second node module implements functions of the second node in the foregoing method. The second node module receives information from another module (for example, a radio frequency module or an antenna) in the second node, where the information is sent by a first node to the second node; or the second node module sends information to another module (for example, a radio frequency module or an antenna) in the second node, where the information is sent by the second node to a first node. The second node module herein may be a baseband chip of the second node, or may be a DU or another module. The DU herein may be a DU in an open radio access network (open radio access network, O-RAN) architecture.

It may be understood that, the processor in this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The memory in this application may be a random access memory, a flash memory, a read-only memory, a programmable read-only memory, an erasable programmable read-only memory, an electrically erasable programmable read-only memory, a register, a hard disk, a removable hard disk, a CD-ROM, or a storage medium of any other form well-known in the art.

For example, a storage medium is coupled to a processor, so that the processor can read information from the storage medium and write information into the storage medium. The storage medium may alternatively be a component of the processor. The processor and the storage medium may be disposed in an ASIC. In addition, the ASIC may be located in a base station or a terminal. Certainly, the processor and the storage medium may exist in a base station or terminal as discrete components.

All or some of the methods in this application may be implemented by software, hardware, firmware, or any combination thereof. When software is used to implement the embodiments, all or a part of the embodiments may be implemented in a form of a computer program product. The computer program product includes one or more computer programs or instructions. When the computer programs or instructions are loaded and executed on the computer, the procedure or functions according to this application are completely or partially generated. The computer may be a general-purpose computer, a dedicated computer, a computer network, a network device, user equipment, a core network device, OAM, or another programmable apparatus. The computer programs or instructions may be stored in a computer-readable storage medium, or may be transmitted from a computer-readable storage medium to another computer-readable storage medium. For example, the computer programs or instructions may be transmitted from a website, computer, server, or data center to another website, computer, server, or data center in a wired or wireless manner. The computer-readable storage medium may be any usable medium that can be accessed by the computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In this application, unless otherwise stated or there is a logic conflict, terms and/or descriptions in different embodiments are consistent and may be mutually referenced, and technical features in different embodiments may be combined based on an internal logical relationship thereof, to form a new embodiment.

In this application, at least one means one or more, and a plurality of means two or more. "And/or" describes an association relationship between associated objects, and represents that three relationships may exist. For example, A and/or B may represent the following cases: A exists alone, both A and B exist, and B exists alone, where A and B may be singular or plural. In the text descriptions of this application, the character "/" indicates an "or" relationship between the associated objects. In a formula in this application, the character "/" indicates a "division" relationship between the associated objects. "Including at least one of A, B, or C" may indicate: including A; including B; including C; including A and B; including A and C; including B and C; and including A, B, and C.

It may be understood that, various numerals used in this application are merely differentiated for ease of description, but are not used to limit the scope of this application. Sequence numbers of the foregoing processes do not mean an execution sequence, and the execution sequence of the processes should be determined based on functions and internal logic of the processes.

## Claims

1. A communication method, comprising:
obtaining, by a first node located in a first cell, a first correspondence between a cell provided by the first node and tracking area information, wherein the first correspondence is related to tracking area information corresponding to the first cell;
migrating, by the first node, from the first cell to a second cell; and
obtaining, by the first node, a second correspondence between the cell provided by the first node and tracking area information, wherein the second correspondence is related to tracking area information corresponding to the second cell.

2. The method according to claim 1, wherein the obtaining, by the first node, a second correspondence between the cell provided by the first node and tracking area information comprises:
receiving, by the first node, a first message from a second node, wherein the first message comprises indication information of the second correspondence; and
obtaining, by the first node, the second correspondence based on the first message.

3. The method according to claim 1, wherein the obtaining, by the first node, a second correspondence between the cell provided by the first node and tracking area information comprises:
receiving, by the first node, a first message from a second node, wherein the first message comprises the tracking area information corresponding to the second cell; and
determining, by the first node, the second correspondence based on the tracking area information corresponding to the second cell.

4. The method according to claim 2 or 3, wherein before the receiving, by the first node, a first message from a second node, the method further comprises:
sending, by the first node, information about the second cell or location information of the first node to the second node, wherein a location of the first node is within a coverage area of the second cell.

5. The method according to any one of claims 1 to 4, further comprising:
sending, by the first node, a notification message to a donor node of the first node, wherein the notification message is used to notify the donor node that a correspondence between the cell provided by the first node and the tracking area information has been updated.

6. The method according to any one of claims 1 to 5, wherein the first cell and the second cell belong to a same donor node; or the first cell belongs to a source donor node, and the second cell belongs to a target donor node.

7. The method according to any one of claims 1 to 6, wherein the first node is an integrated access and backhaul IAB-distributed unit DU; and the second node is an IAB-mobile termination MT, an operations, administration, and maintenance OAM, the source donor node, or the target donor node.

8. A communication method, comprising:
obtaining, by a second node, a second correspondence between a cell provided by a first node and tracking area information, wherein the second correspondence is related to tracking area information corresponding to a second cell, and the first node is located in the second cell; and
sending, by the second node, a first message to the first node, wherein the first message comprises indication information of the second correspondence, and the second node is an integrated access and backhaul IAB-node or a donor node.

9. The method according to claim 8, wherein the obtaining, by a second node, a second correspondence between a cell provided by a first node and tracking area information comprises:
receiving, by the second node, a second message from a third node, wherein the second message comprises the tracking area information corresponding to the second cell; and
determining, by the second node, the second correspondence based on the tracking area information corresponding to the second cell.

10. The method according to claim 8, wherein the obtaining, by a second node, a second correspondence between a cell provided by a first node and tracking area information comprises:
receiving, by the second node, a second message from a third node, wherein the second message comprises the indication information of the second correspondence; and
obtaining, by the second node, the second correspondence based on the second message.

11. The method according to claim 9 or 10, wherein before the receiving, by the second node, a second message from a third node, the method further comprises:
sending, by the second node, information about the second cell or location information of the first node to the third node, wherein a location of the first node is within a coverage area of the second cell.

12. The method according to claim 8, wherein the obtaining, by a second node, a second correspondence between a cell provided by a first node and tracking area information comprises:
receiving, by the second node, information about the second cell that is from the first node or location information of the first node that is from the first node, wherein a location of the first node is within a coverage area of the second cell;
determining, by the second node based on the information about the second cell or the location information of the first node, the tracking area information corresponding to the second cell; and
determining, by the second node, the second correspondence based on the tracking area information corresponding to the second cell.

13. The method according to claim 8, wherein the obtaining, by a second node, a second correspondence between a cell provided by a first node and tracking area information comprises:
determining, by the second node based on a cell measurement result, that the first node needs to be handed over from a first cell to the second cell; and
determining, by the second node, the second correspondence based on the tracking area information corresponding to the second cell.

14. The method according to any one of claims 8 to 13, wherein the first node is an integrated access and backhaul IAB-distributed unit DU, and the third node is a parent node of the first node, an IAB-MT, an OAM, a source donor node, a target donor node, or an access and mobility management function AMF.

15. A communication apparatus, comprising:
a processing unit, configured to obtain a first correspondence between a cell provided by a first node and tracking area information, wherein the first correspondence is related to tracking area information corresponding to a first cell, wherein
the processing unit is further configured to migrate from the first cell to a second cell; and
the processing unit is further configured to obtain a second correspondence between the cell provided by the first node and tracking area information, wherein the second correspondence is related to tracking area information corresponding to the second cell.

16. The apparatus according to claim 15, wherein that the processing unit obtains the second correspondence between the cell provided by the first node and the tracking area information comprises:
controlling a transceiver unit of the apparatus to receive a first message from a second node, wherein the first message comprises indication information of the second correspondence; and
obtaining the second correspondence based on the first message.

17. The apparatus according to claim 15, wherein that the processing unit obtains the second correspondence between the cell provided by the first node and the tracking area information comprises:
controlling a transceiver unit of the apparatus to receive a first message from a second node, wherein the first message comprises the tracking area information corresponding to the second cell; and
determining the second correspondence based on the tracking area information corresponding to the second cell.

18. The apparatus according to claim 16 or 17, wherein the transceiver unit is further configured to:
send information about the second cell or location information of the first node to the second node, wherein a location of the first node is within a coverage area of the second cell.

19. The apparatus according to any one of claims 15 to 18, wherein the transceiver unit of the apparatus is further configured to:
send a notification message to a donor node of the first node, wherein the notification message is used to notify the donor node that a correspondence between the cell provided by the first node and the tracking area information has been updated.

20. The apparatus according to any one of claims 15 to 19, wherein the first cell and the second cell belong to a same donor node; or the first cell belongs to a source donor node, and the second cell belongs to a target donor node.

21. The apparatus according to any one of claims 15 to 20, wherein the first node is an integrated access and backhaul IAB-distributed unit DU; and the second node is an IAB-mobile termination MT, an operations, administration, and maintenance OAM, the source donor node, or the target donor node.

22. A communication apparatus, comprising:
a processing unit, configured to obtain a second correspondence between a cell provided by a first node and tracking area information, wherein the second correspondence is related to tracking area information corresponding to a second cell, and the first node is located in the second cell; and
a transceiver unit, configured to send a first message to the first node, wherein the first message comprises indication information of the second correspondence, and a second node is an integrated access and backhaul IAB-node or a donor node.

23. The apparatus according to claim 22, wherein that the processing unit obtains the second correspondence between the cell provided by the first node and the tracking area information comprises:
controlling the transceiver unit to receive a second message from a third node, wherein the second message comprises the tracking area information corresponding to the second cell; and
determining the second correspondence based on the tracking area information corresponding to the second cell.

24. The apparatus according to claim 22, wherein that the processing unit obtains the second correspondence between the cell provided by the first node and the tracking area information comprises:
controlling the transceiver unit to receive a second message from a third node, wherein the second message comprises the indication information of the second correspondence; and
obtaining the second correspondence based on the second message.

25. The apparatus according to claim 23 or 24, wherein
the transceiver unit is further configured to send information about the second cell or location information of the first node to the third node, wherein a location of the first node is within a coverage area of the second cell.

26. The apparatus according to claim 22, wherein that the processing unit obtains the second correspondence between the cell provided by the first node and the tracking area information comprises:
controlling the transceiver unit to receive information about the second cell or location information of the first node from the first node, wherein a location of the first node is within a coverage area of the second cell;
determining, based on the information about the second cell or the location information of the first node, the tracking area information corresponding to the second cell; and
determining the second correspondence based on the tracking area information corresponding to the second cell.

27. The apparatus according to claim 22, wherein that the processing unit obtains the second correspondence between the cell provided by the first node and the tracking area information comprises:
determining, based on a cell measurement result, that the first node needs to be handed over from a first cell to the second cell; and
determining the second correspondence based on the tracking area information corresponding to the second cell.

28. The apparatus according to any one of claims 22 to 27, wherein the first node is an integrated access and backhaul IAB-distributed unit DU, and the third node is a parent node of the first node, an IAB-MT, an OAM, a source donor node, a target donor node, or an access and mobility management function AMF.

29. A communication apparatus, comprising a processor and a memory, wherein the processor is coupled to the memory; and the processor executes a computer program stored in the memory, so that the communication apparatus implements the method according to any one of claims 1 to 7.

30. A communication apparatus, comprising a processor and a memory, wherein the processor is coupled to the memory; and the processor executes a computer program stored in the memory, so that the communication apparatus implements the method according to any one of claims 8 to 14.

31. A communication apparatus, wherein the apparatus is configured to perform the method according to any one of claims 1 to 7.

32. A communication apparatus, wherein the apparatus is configured to perform the method according to any one of claims 8 to 14.

33. A communication system, comprising the communication apparatus according to any one of claims 15 to 21 and the communication apparatus according to any one of claims 22 to 28, comprising the communication apparatus according to claim 29 and the communication apparatus according to claim 30, or comprising the communication apparatus according to claim 31 and the communication apparatus according to claim 32.

34. A computer-readable storage medium, wherein the computer-readable storage medium stores instructions; and when the instructions are run on a computer, the computer is enabled to perform the method according to any one of claims 1 to 7 or the method according to any one of claims 8 to 14.

35. A computer program product, comprising instructions, wherein when the instructions are run on a computer, the computer is enabled to perform the method according to any one of claims 1 to 7 or the method according to any one of claims 8 to 14.
